# EUROPÄISCHE PATENTSCHRIFT

(11) **EP 3 406 796 B1**
(45) Veröffentlichungstag und Bekanntmachung des Hinweises auf die Patenterteilung: **09.10.2019**
(21) Anmeldenummer: 18172040.0
(22) Anmeldetag: 14.05.2018
(51) Int. Cl.: E01C 23/088

(54) **BODENBEARBEITUNGSMASCHINE, DEREN ARBEITSVORRICHTUNG MIT EINEM BORD-AKTUATOR AUS IHRER BETRIEBSPOSITION VERLAGERBAR IST**
SOIL WORKING MACHINE, THE WORKING UNIT OF WHICH CAN BE MOVED FROM ITS OPERATING POSITION WITH AN ON-BOARD ACTUATOR
MACHINE DE TRAITEMENT DU SOL, SON DISPOSITIF DE TRAVAIL POUVANT ÊTRE DÉPLACÉ DE SA POSITION DE FONCTIONNEMENT AU MOYEN D'UN PANNEAU D'ACTIONNEUR

(30) Priorität: 23.05.2017 DE 102017208775
(43) Veröffentlichungstag der Anmeldung: 28.11.2018
(73) Patentinhaber: Wirtgen GmbH, 53578 Windhagen (DE)
(72) Erfinder: Berning, Christian, 53909 Zülpich (DE); Buhr, Karsten, 56594 Willroth (DE); Frankemölle, Markus, 53773 Hennef (DE); Lehnert, Thomas, 56587 Oberraden (DE); Salz, Andreas, 53577 Neustadt (Wied) (DE); Wilhelmi, Hardy, 53547 Dattenberg (DE)
(74) Vertreter: Ruttensperger Lachnit Trossin Gomoll

(56) Entgegenhaltungen:
- DE-A1- 3 911 947
- DE-A1- 4 037 448
- DE-A1-102012 008 252
- DE-B3-102006 015 506

## Beschreibung

Die vorliegende Erfindung betrifft eine Bodenbearbeitungsmaschine, wie Straßenfräse, Recycler, Stabilisierer oder Surface-Miner, umfassend einen Maschinenkörper mit einem Maschinenrahmen und einer relativ zum Maschinenrahmen um eine Antriebsachse, welche eine axiale Richtung definiert, zur Drehung antreibbaren Antriebsformation, welche sich längs der Antriebsdrehachse von einem Einleitungslängsende, an dem die Antriebsformation zur Einleitung eines Antriebsdrehmoments ausgebildet ist, zu einem dem Einleitungslängsende axial entgegengesetzten Funktionslängsende erstreckt und mit welcher eine für eine Bodenbearbeitung ausgebildete Arbeitsvorrichtung in einer für eine Bodenbearbeitung betriebsbereiten Betriebsposition Drehmoment übertragend zur gemeinsamen Drehung um die Antriebsachse lösbar verbunden ist, wobei die Arbeitsvorrichtung bei gelöster Verbindung zur Demontage von der Antriebsformation relativ zur Antriebsformation in axialer Richtung aus der Betriebsposition entfernbar und zur Montage an die Antriebsformation relativ zur Antriebsformation in axialer Richtung in die Betriebsposition bringbar ist, wobei ein Aktuator vorgesehen ist, welcher dazu ausgebildet ist, die Arbeitsvorrichtung bei gelöster Verbindung aus der Betriebsposition zu bewegen.

Aus der gattungsgemäßen DE 10 2012 008 252 A1 ist eine Bodenfräsmaschine mit einer um die Antriebsachse einer Antriebsformation drehbaren Fräswalze als der Arbeitsvorrichtung bekannt, wobei die Fräswalze nur dann um die Antriebsachse drehbar ist, wenn sich die Fräswalze relativ zur Antriebsformation in ihrer Betriebsposition befindet und mit dieser zur gemeinsamen Drehung um die Antriebsachse verbunden ist.
Eine weitere Bodenfräsmaschine mit Abdrückeinrichtung für das Fräsrohr ist aus der DE 10 2006 015 506 B3 bekannt.
Die Antriebsformation der bekannten Bodenfräsmaschine befindet sich - bei Betrachtung im betriebsbereiten Zustand der bekannten Bodenfräse - radial innerhalb der Fräswalze. Die Fräswalze ist an zwei axial mit Abstand voneinander gelegenen Lagerstellen an der Antriebsformation abgestützt, wobei die näher bei dem Einleitungslängsende gelegene Lagerstelle mittels einer Stirnverzahnung eine Formschlusskupplung zur Drehmomentübertragung zwischen Antriebsformation und Fräswalze bildet. Die DE 10 2012 008 252 A1 offenbart in nicht näher detaillierter Weise, dass die Formschlusskupplung selbst, also die im betriebsbereiten Zustand miteinander kämmenden stirnverzahnten Bauteile des Maschinenkörpers der Bodenfräsmaschine einerseits und der Fräswalze andererseits eine "Druckbeaufschlagungs-Einrichtung" zur Fluiddruckbeaufschlagung der Formschlusskupplung zur Trennung der Kupplungshälften aufweisen soll. Bevorzugt soll die Trennung der Formschlusskupplungshälften pneumatisch erfolgen.

Weiter kann die aus der DE 10 2012 008 252 A1 bekannte Bodenfräsmaschine eine Zylinder-Kolben-Einheit aufweisen, um mit dieser Einheit die Fräswalze aus dem formschlüssigen Kupplungseingriff zu einem Loslager der Fräswalze hin wegzudrücken. Das Loslager ist dabei im Bereich der der Antriebsseite ferner liegenden Lagerstelle gebildet. Auf der Antriebsseite der Bodenfräsmaschine wird ein Antriebsdrehmoment von einem Antriebsmotor zur Antriebsformation übertragen.

Über die bloße Nennung der zu verwendenden Mittel hinaus macht die DE 10 2012 008 252 A1 jedoch keinerlei Angaben, wie die Druckbeaufschlagungs-Einrichtung ausgestaltet sein sollte, wo sie oder/und die Zylinder-Kolben-Einheit angeordnet sein könnten und wie diese in Kraftübertragungseingriff mit einer oder mit beiden Formschlusskupplungshälften bringbar sein sollen.

Aus der US 4 704 045 A ist eine Bodenbearbeitungsmaschine, ebenfalls in Gestalt einer Bodenfräse, bekannt, deren Fräswalze als Arbeitsvorrichtung axial zwischen zwei Antriebsscheiben drehmomentübertragend einspannbar ist. Die Antriebsscheiben an beiden axialen Endbereichen der Fräswalze sind jeweils an einem Seitengestell gelagert, von welchen jedes Seitengestell relativ zu einem ortsfesten Maschinenrahmen der aus der US 4 704 045 A bekannten Bodenfräse mittels hydraulischer Kolben-Zylinder-Einheiten axial verlagerbar ist. Mit den so axial verlagerbaren Seitengestellen kann der Ort des Bearbeitungseingriffs, an welchem die Fräswalze Material vom Boden abträgt, längs der Maschinenbreite verlagert werden. Zusätzlich kann durch Verlagerung der Seitengestelle relativ zueinander die Fräswalze aus ihrer Aufnahme ausgespannt und in diese eingespannt werden.

Aus der DE 40 37 448 A1 ist eine Straßenfräse bekannt, bei welcher eine Fräswalze zwischen einem der Antriebsseite der Straßenfräse näher gelegenen Festlager und einem auf der der Antriebsseite gegenüberliegenden Nullseite der Straßenfräse an einer beweglichen Seitenplatte des Maschinenkörpers angeordneten Loslager axial eingespannt ist. Die das Loslager tragende Seitenplatte ist an einem mit Abstand vom Loslager gelegenen Ort mittels eines hydraulischen Stellzylinders mit dem Maschinenrahmen verbunden. Durch Betätigung des Stellzylinders kann das Loslager aus der Fräswalze herausgefahren werden und in die Fräswalze eingedrückt werden. Durch entsprechende Montagereihenfolge kann sogar dafür gesorgt werden, dass zunächst die Fräswalze gemeinsam mit dem Loslager durch Betätigung des Stellzylinders vom Festlager abgezogen wird und erst anschließend nach Lösen einer Verbindung zwischen Loslager und Fräswalze durch weitere Betätigung des Stellzylinders das Loslager von der Fräswalze abgezogen werden kann.

Im Falle des entfernt vom Loslager angeordneten Stellzylinders wirken bei der Demontage und auch bei der Montage der Fräswalze unvermeidlich hohe Montagemomente wenigstens auf die beteiligten Lagerbaugruppen, da zwischen dem hydraulischen Stellzylinder und den durch ihn zu verlagernden Lagerbauteilen ein beachtlicher Lastarm besteht.

Die aus der US 4 704 045 A bekannte Lösung weist den Nachteil auf, dass die die Seitengestelle bewegenden hydraulischen Stellzylinder während des gesamten Betriebs der bekannten Bodenfräse eine Axialkraft auf die Fräswalze ausüben müssen, um diese in einem axial gespannten Zustand zu halten. Damit wirken die erheblichen am Bodenbearbeitungseingriff auftretenden Bearbeitungsreaktionskräfte auf die hydraulischen Stellzylinder zurück. Im Übrigen treten auch hier erhebliche Momente bei der Kraftübertragung zwischen den mit Abstand von der Antriebsachse angeordneten hydraulischen Stellzylindern und der Lagerung der Fräswalze auf.

Es ist Aufgabe der vorliegenden Erfindung, eine Bodenbearbeitungsmaschine der eingangs genannten Art derart weiterzubilden, dass die Arbeitsvorrichtung bei einem Wechsel der Arbeitsvorrichtung an der Bearbeitungsmaschine unter Vermeidung oder wenigstens Verringerung einer Montagemomentenbelastung der Antriebsformation möglichst einfach und schnell aus der Betriebsposition hinaus verlagert werden kann.

Gemäß einem ganz allgemeinen Lösungsgedanken löst die vorliegende Erfindung die genannte Aufgabe an einer Bodenbearbeitungsmaschine der eingangs genannten Art dadurch, dass ein Aktuatorgehäuse des Aktuators an der Antriebsformation zur gemeinsamen Bewegung mit dieser an einer Position vorgesehen ist, welche näher bei dem Funktionslängsende als bei dem Einleitungslängsende gelegen ist, wobei ein Aktuatorglied des Aktuators relativ zum Aktuatorgehäuse beweglich ist.

Durch die Anordnung des Aktuators in dem genannten dem Funktionslängsende näher gelegenen Endabschnitt der Antriebsformation kann der zwischen dem Aktuator und der Arbeitsvorrichtung wirkende Lastarm erheblich verkürzt oder sogar vollständig vermieden werden, was die Neigung der Arbeitsvorrichtung, beim Aufziehen auf die Antriebsformation zu verkanten, erheblich reduziert oder sogar vollständig beseitigt. Ein nachteiliges Montagemoment um eine mit der Antriebsachse einen Winkel, sogar rechten Winkel, einschließenden Momentenachse kann dadurch verringert oder vermieden werden. Somit kann die Kraft des Aktuators effizient ausgenutzt werden, um die Arbeitsvorrichtung, die eine große Masse von häufig mehr als einer Tonne aufweist, an ihre Betriebsposition anzunähern.

Das Aktuatorglied des wie angegeben angeordneten Aktuators kann die Antriebsformation ohne Risiko einer Kollision mit anderen Bauteilen am Funktionslängsende durchsetzen und in Kraftangriff mit der Arbeitsvorrichtung gelangen. Am Funktionslängsende steht für das Aktuatorglied ausreichend Bauraum zur Verfügung. Der näher am Funktionslängsende angeordnete Aktuator, dessen Aktuatorglied das Funktionslängsende zum Kraftangriff mit der Arbeitsvorrichtung durchsetzt, kommt mit kürzeren Aktuatorgliedern aus, als wenn das Aktuatorgehäuse am entgegengesetzten dem Einleitungslängsende näheren Endbereich der Antriebsformation angeordnet wäre. Das kürzere Aktuatorglied ist bei gleicher Querschnittsgestalt und gleichem Material biegesteifer als ein ansonsten notwendiges längeres Aktuatorglied.

Bevorzugt kann die Arbeitsvorrichtung durch den Aktuator in eine axial von deren Betriebsposition entfernt gelegene Vorbereitungsposition bewegt werden, von welcher aus sie bequem durch Bedienpersonal vollständig von der Antriebsformation und somit von der Bodenbearbeitungsmaschine abgenommen werden kann. Die Vorbereitungsposition kann zwar grundsätzlich jede beliebige axial von der Betriebsposition entfernt gelegene Relativposition zwischen Arbeitsvorrichtung und Antriebsformation sein. Um die Montagearbeit spürbar zu erleichtern, ist die Vorbereitungsposition jedoch bevorzugt wenigstens 60 mm, stärker bevorzugt wenigstens 80 mm, besonders bevorzugt wenigstens 95 mm von der Betriebsposition entfernt.

Sofern in der vorliegenden Anmeldung im Einzelfall nichts Abweichendes ausgesagt ist, wird die Bodenbearbeitungsmaschine im betriebsbereiten Zustand beschrieben. In diesem Falle ist die Antriebsachse Drehachse der Arbeitsvorrichtung, sodass die Antriebsachse ganz grundsätzlich auch als Basis eines Polar- bzw. Zylinderkoordinatensystems für die Arbeitsvorrichtung dienen kann. Die Arbeitsvorrichtung erstreckt sich somit von ihrem dem Einleitungslängsende der Antriebsformation nähergelegenen Antriebsaxialende zu ihrem dem Antriebsaxialende entgegengesetzten und daher dem Funktionslängsende nähergelegenen Sicherungsaxialende, in dessen Bereich bevorzugt die Arbeitsvorrichtung in der Betriebsposition an der Antriebsformation gegen axiale Verlagerung gesichert ist.

Um zu ermöglichen, dass die Arbeitsvorrichtung räumlich kompakt durch die Antriebsformation zur Drehung angetrieben werden kann, ohne dass die Antriebsformation üblicherweise auf der nach radial außen weisenden Seite der Arbeitsvorrichtung gelegene Bearbeitungswerkzeuge stört, ist bevorzugt vorgesehen, dass die Arbeitsvorrichtung die Antriebsformation sowohl dann, wenn sich die Arbeitsvorrichtung in der Betriebsposition befindet, als auch dann, wenn sich die Arbeitsvorrichtung in der Vorbereitungsposition befindet, radial außen umgibt. Die Antriebsformation kann vor allem in der Vorbereitungsposition, aber auch in der Betriebsposition, von einem Antriebsaxialende als einem axialen Längsende der Arbeitsvorrichtung her axial in die Arbeitsvorrichtung einragen.

Die Antriebsformation ragt im betriebsbereiten Zustand der Arbeitsvorrichtung, also wenn diese sich in der Betriebsposition befindet, axial bevorzugt nicht über deren Sicherungsaxialende hinaus, um die Arbeitsvorrichtung an ihrem Sicherungsaxialende möglichst nah an den Rand des übrigen Maschinenkörpers annähern zu können. Diejenige Seite der Bodenbearbeitungsmaschine, der das Funktionslängsende axial näher gelegen ist, wird als "Nullseite" bezeichnet, die axial entgegengesetzte, dem Einleitungslängsende näher gelegene Maschinenseite als "Antriebsseite". Bevorzugt überragt die Arbeitsvorrichtung die Antriebsformation axial zu wenigstens einer Seite, etwa mit ihrem Sicherungsaxialende.

In diesem Falle kann das dem Antriebsaxialende entgegengesetzte Sicherungsaxialende der Arbeitsvorrichtung nahe an die Nullseite des Maschinenkörpers herangeführt werden, sodass ein Maschinenführer sich an der Nullseite der Maschine bzw. des Maschinenkörpers orientieren kann, um die Bodenbearbeitungsmaschine zur Bodenbearbeitung gezielt nahe an Bodenbearbeitungsgrenzen heranführen zu können.

Bevorzugt überragt die Arbeitsvorrichtung die Antriebsformation zur Erzielung eines kompakten Aufbaus axial zu beiden Seiten.

Üblicherweise ist die Antriebsformation mit einem Antriebsmotor der Bodenbearbeitungsmaschine gekoppelt, wobei der Antriebsmotor jedoch in der Regel eine höhere Drehzahl aufweist als die an der Antriebsformation bei bestimmungsgemäßer Bodenbearbeitung benötigte Drehzahl. Daher befindet sich in Wirkverbindung mit der Antriebsformation üblicherweise ein Drehzahl untersetzendes und somit Drehmoment übersetzendes Getriebe. Bevorzugt umfasst die Antriebsformation einen Teil des Getriebegehäuses des Getriebes und ist besonders bevorzugt mit einem Hohlrad des Getriebes zur gemeinsamen Drehung gekoppelt, wenn das Getriebe bauraumsparend als Planetengetriebe ausgebildet ist. Da die Antriebsformation bei betriebsbereiter Bodenbearbeitungsmaschine radial außen von der Arbeitsvorrichtung umgeben ist, erfolgt die Einleitung von Antriebsdrehmoment in die Antriebsformation von dem Einleitungslängsende der Antriebsformation her. Das dem Einleitungslängsende axial entgegengesetzte andere Längsende der Antriebsvorrichtung ist zur Unterscheidung vom Einleitungslängsende nachfolgend auch als "Funktionslängsende" bezeichnet, da an ihm Funktionen wie Zentrierung oder/und Drehmomentübertragung zur Arbeitsvorrichtung oder/und die Befestigung des Aktuatorgehäuses oder/und eine Energieversorgung des Aktuators realisiert sein können.

Bevorzugt ist die Antriebsformation längs der Antriebsachse relativ zum übrigen Maschinenkörper unbeweglich.

Um möglichst kurze und damit biegesteife Aktuatorglieder einsetzen zu können kann die Antriebsformation gemäß einer bevorzugten Weiterbildung der vorliegenden Erfindung einen die Antriebsformation am Funktionslängsende abschließenden Deckel umfassen, wobei das Aktuatorgehäuse bevorzugt am Deckel befestigt ist, etwa durch Verschraubung. Der Deckel kann mehrteilig oder zur Vermeidung einer hohen Anzahl an Bauteilen bevorzugt einstückig ausgeführt sein. Bevorzugt umfasst die Antriebsformation einen nachfolgend wegen seiner Anordnung radial innerhalb der Arbeitsvorrichtung als "Innenrohr" bezeichneten Rohrkörper, welchen der Deckel am Funktionslängsende der Antriebsformation mit Ausnahme von etwaigen funktionswichtigen Durchgängen und Ausnehmungen axial abschließt.

Das Aktuatorgehäuse und der Aktuator insgesamt können gut vor den äußeren Einflüssen durch die räumlich nahe bei der Antriebsformation stattfindende Bodenbearbeitung geschützt werden, wenn das Aktuatorgehäuse auf der dem Einleitungslängsende zugewandten Seite des Deckels angeordnet ist. Damit die Arbeitsvorrichtung oder ein starr mit ihr verbundener Bauteilabschnitt für einen Kraftangriff des Aktuatorglieds erreichbar ist, kann der Deckel eine ihn axial durchsetzende Ausnehmung aufweisen, welche vom Aktuatorglied vollständig durchsetzbar ist.

Zum Schutz vor aggressiven äußeren Einflüssen kann sich wenigstens das Aktuatorgehäuse in einem von Deckel und Rohrkörper eingefassten Aufnahmeraum befinden. Abhängig von den physikalischen Wirkprinzipien, die der Aktuator nutzt, kann die Versorgung des Aktutators mit Energie durch dessen Aufnahme in einem von der Antriebsformation umgebenen Aufnahmeraum mehr oder weniger stark erschwert sein. Mögliche Lösungen hierfür sind weiter unten ausgeführt.

Um Gewicht und Masse der Bodenbearbeitungsmaschine zu reduzieren, ohne die Montierbarkeit der Antriebsformation zu beeinträchtigen, kann der Rohrkörper einen Rohrabschnitt und an seinem dem Deckel näher gelegenen Längsende einen mit dem Rohrabschnitt verbundenen Tragring aufweisen, welcher eine größere radiale Dicke aufweist als der Rohrabschnitt. Eine Verbindung, insbesondere lösbare Verbindung, des Deckels mit dem Rohrkörper kann dann durch eine Verbindung des Deckels unmittelbar mit dem Tragring hergestellt sein. Aus Gründen eines möglichst geringen Gewichts reicht der Rohrabschnitt, der bevorzugt ein zylindrischer Rohrabschnitt ist, axial vom Tragring bis zu einem Getriebegehäusebauteil des oben genannten Drehmoment übersetzenden Getriebes, mit welchem der Rohrabschnitt am Funktionslängsende der Antriebsformation verbunden ist, vorzugsweise unlösbar verbunden ist.

Eine Verbindung ist im Sinne dieser Anmeldung dann lösbar, wenn sie ohne Zerstörung von zur Verbindung beitragenden Bauteilen lösbar ist. Eine Verschraubung oder eine Verrastung oder eine Klemmung oder ein Bajonett-Formschluss sind Beispiele für lösbare Verbindungen. Eine unlösbare Verbindung, wie etwa eine Schweiß- oder Nietverbindung, kann dagegen nur durch Zerstörung der Verbindung getrennt werden.

Wie oben bereits angedeutet wurde, kann das Aktuatorglied grundsätzlich schwenkbeweglich an einem Aktuatorgehäuse oder an einer Aktuatorbasis angeordnet sein. Allerdings können schwenkbewegliche Aktuatorglieder verglichen mit translatorisch beweglichen Aktuatorgliedern einen geringeren axialen Bewegungsraum aufweisen. Um die Arbeitsvorrichtung ausgehend von der Betriebsposition eine möglichst große Strecke bewegen zu können, ist es daher bevorzugt, dass das Aktuatorglied relativ zur Antriebsformation translatorisch axial zwischen einer eingezogenen und einer ausgefahrenen Position bewegbar ist.

Bevorzugt ist das Aktuatorglied wenigstens 150 mm, stärker bevorzugt wenigstens 250 mm, zwischen der eingezogenen und der ausgefahrenen Position translatorisch bewegbar.

Die Längsachse des Aktuatorglieds ist folglich bevorzugt parallel oder sogar koaxial zur Antriebsachse der Antriebsformation, an welcher der Aktuator angeordnet ist.

Um mit dem Aktuator die Arbeitsvorrichtung nicht nur aus der Betriebsposition weg verlagern, sondern diese auch aus der Vorbereitungsposition in die Betriebsposition bewegen zu können, weist bevorzugt ein starr mit der Arbeitsvorrichtung verbundener Bauteilabschnitt eine Aktuator-Durchgangsöffnung auf, welche das Aktuatorglied in seiner ausgefahrenen Position durchsetzen kann. Dieser Bauteilabschnitt kann ein Verbindungsflansch der Arbeitsvorrichtung sein, welcher dazu ausgebildet ist, die Arbeitsvorrichtung zur gemeinsamen Drehung mit der Antriebsformation um die Antriebsachse zu verbinden. Dieser Aktuator-Durchgangsöffnung ist bevorzugt eine Kopplungsgegenstruktur benachbart, um eine Kraftübertragung vom Aktuatorglied auf die Arbeitsvorrichtung in Montagerichtung, also zur Betriebsposition hin, zu erleichtern. Bevorzugt läuft die Kopplungsgegenstruktur vollständig um die Aktuator-Durchgangsöffnung um, um eine Kraftübertragung zwischen Aktuatorglied und Arbeitsvorrichtung möglichst großflächig und damit mit geringen Flächenlasten und möglichst gleichmäßig zu ermöglichen.

Ein starr mit der Arbeitsvorrichtung verbundener Bauteilabschnitt kann einstückig mit der Arbeitsvorrichtung verbunden sein oder kann als gesondertes Bauteil an die Arbeitsvorrichtung, bevorzugt spielfrei, anmontiert sein. Das gesonderte Bauteil kann unlösbar mit der Arbeitsvorrichtung verbunden sein. Bevorzugt ist die Verbindung zu Reparatur- und Wartungszwecken lösbar mit der Arbeitsvorrichtung verbunden, etwa durch Verschraubung.

Bevorzugt durchsetzt das Aktuatorglied in seiner eingezogenen Stellung die Aktuator-Durchgangsöffnung nicht. Das Aktuatorglied ragt dann nur von der Antriebsformation her in die Aktuator-Durchgangsöffnung axial ein, ohne sie vollständig zu durchsetzen, oder ist vollständig aus dieser zurückgezogen.

Zur Klärung von Zweifelfällen sei angemerkt: Bei Betrachtung einer in ihrer Betriebsposition an der Antriebsformation angeordneten Arbeitsvorrichtung befindet sich das vom Antriebsaxiallängsende weg weisende Längsende des Aktuatorglieds in der ausgefahrenen Position weiter vom Antriebsaxialende der Arbeitsvorrichtung entfernt als in der eingezogenen Position des Aktuatorglieds.

Um die Arbeitsvorrichtung bei einer Demontage aus der Betriebsposition axial herauszubewegen, kann als konkrete konstruktive Maßnahme vorgesehen sein, dass eine Löseformation des Aktuatorglieds mit einer Gegenlöseformation der Arbeitsvorrichtung durch axiale Bewegung des Aktuatorglieds in Lösekraftübertragungseingriff bringbar ist, wobei bei hergestelltem Lösekraftübertragungseingriff die Arbeitsvorrichtung durch den Aktuator aus der Betriebsposition heraus verlagerbar ist. Die Löseformation kann einstückig mit dem Aktuatorglied verbunden sein oder dauerhaft, also über die Dauer eines Demontagevorgangs hinaus, an dieses anmontiert sein. Ebenso kann die Löseformation nur für den einzelnen Demontagevorgang lösbar an dem Aktuatorglied anbringbar und wieder abnehmbar sein, wenngleich dies wegen der häufig schwierigen Zugänglichkeit des Aktuatorglieds vor der Demontage der Arbeitsvorrichtung nicht bevorzugt ist.

Die Löseformation kann als Radialvorsprung ausgebildet sein, bezogen auf die Bewegungsachse des Aktuatorglieds.

Dann, wenn der Aktuator dazu ausgebildet ist, die Arbeitsvorrichtung relativ zur Antriebsformation sowohl zur Betriebsposition hin, vorzugsweise in die Betriebsposition, als auch in entgegengesetzter Richtung aus der Betriebsposition weg zu bewegen, ist der Aktuator ein doppeltwirkender Aktuator, welcher in entgegengesetzte Richtungen Kraft auf die Arbeitsvorrichtung ausüben kann.

Es soll jedoch für die Demontage ausdrücklich auch ein einfachwirkender Aktuator nicht ausgeschlossen sein, dessen Aktuatorglied zur Bewegung in eine Vorbelastungsrichtung vorbelastet ist und durch den Aktuator nur gegen die Wirkung der Vorbelastung in einer der Vorbelastungsrichtung entgegengesetzten Arbeitsrichtung verlagerbar ist.

Die Arbeitsrichtung ist dann bevorzugt eine von der Betriebsposition weg, also eine von der eingezogenen zu der ausgefahrenen Position des Aktuatorglieds hin verlaufende Richtung.

Es sei lediglich der Deutlichkeit halber klargestellt, dass die axiale Bewegung des Aktuatorglieds zur Herstellung des Lösekraftübertragungseingriffs bevorzugt eine Bewegung des Aktuatorglieds in Richtung von der eingezogenen Position zur ausgefahrenen Position hin ist. Die Bewegung des Aktuatorglieds zur Verlagerung der Arbeitsvorrichtung von der Vorbereitungsposition in Richtung der Betriebsposition ist dagegen eine Bewegung in Richtung von der ausgefahrenen Position hin zur eingezogenen Position.

Grundsätzlich kann die Gegenlöseformation dauerhaft an der Arbeitsvorrichtung ausgebildet oder angeordnet sein, etwa durch Ausbildung der Gegenlöseformation an einem starr mit der Arbeitsvorrichtung zur gemeinsamen Bewegung verbundenen Bauteil oder Bauteilabschnitt. Um problemlos den Aktuator sowohl für die Montage der Arbeitsvorrichtung als auch für ihre Demontage verwenden zu können oder um eine versehentliche Kraftausübung des Aktuators auf die Arbeitsvorrichtung von der Betriebsposition weg zu vermeiden, ist es jedoch bevorzugt, dass die Gegenlöseformation an einem Gegenlösebauteil ausgebildet ist, welches abnehmbar mit der Arbeitsvorrichtung verbindbar ist, ohne dass durch die Abnahme des Gegenlösebauteils die Betriebsbereitschaft der Arbeitsvorrichtung beeinträchtigt wird. Dann kann die Arbeitsvorrichtung durch den Aktuator nur dann aus der Betriebsposition herausbewegt werden, wenn das Gegenlösebauteil an der Arbeitsvorrichtung angebracht ist. Zur weiteren Erhöhung der Betriebssicherheit kann vorgesehen sein, dass das Gegenlösebauteil sich im an der Arbeitsvorrichtung angebrachten Zustand wenigstens teilweise in einen Bauraum erstreckt, welcher im betriebsbereiten Zustand der Arbeitsvorrichtung durch ein die Arbeitsvorrichtung in ihrer Betriebsposition an der Antriebsformation sichernden Sicherungsbauteil, etwa einer Sicherungsschraube, belegt ist. So kann das Gegenlösebauteil erst an der Arbeitsvorrichtung angebracht werden, nachdem zuvor das Sicherungsbauteil abgenommen wurde. Außerdem muss dann zur Positonssicherung der Arbeitsvorrichtung in der Betriebsposition das Gegenlösebauteil wieder von der Arbeitsvorrichtung abgenommen sein.

Um die Anzahl an Bauteilen zur Realisierung der vorliegenden Erfindung möglichst gering zu halten, ist es bevorzugt, wenn eine Kopplungsstruktur, welche der mittelbaren Herstellung eines Montagekraftübertragungseingriffs zwischen dem Aktuatorglied und der Arbeitsvorrichtung zur Bewegung der Arbeitsvorrichtung von der Vorbereitungsposition in die Betriebsposition und damit der Montage der Arbeitsvorrichtung dient, am Gegenlösebauteil ausgebildet ist. Dann kann das Gegenlösebauteil sowohl für die Demontage als auch für die Montage verwendet werden. Beispielsweise kann das Gegenlösebauteil eine Ausnehmung mit einem Innengewinde aufweisen, welches auf ein Außengewinde am Aktuatorglied aufschraubbar ist. Wurde das Aktuatorglied in die ausgefahrene Position bewegt, in welches es die oben genannte Aktuator-Durchgangsöffnung der Arbeitsvorrichtung durchsetzt, kann die Kopplungsstruktur des Gegenlösebauteils auf das Aktuatorglied aufgeschraubt werden - wobei alternativ zu einem Gewinde auch eine beliebige andere Formschlussverbindung verwendbar ist, beispielsweise ein Bajonettverschluss -, sodass beim Einfahren des Aktuatorglieds zurück in Richtung zur eingefahrenen Position hin das Gegenlösebauteil mit seinem die Kopplungsstruktur bildenden Bauteilabschnitt am Rand der Aktuator-Durchgangsöffnung anliegt und so das Aktuatorglied die Arbeitsvorrichtung bei seiner axialen Bewegung zurück in Richtung zur eingefahrenen Position mitbewegt.

Beispielsweise kann das Gegenlösebauteil in eine Öffnung der Arbeitsvorrichtung einsetzbar und in dieser Öffnung festlegbar sein, beispielsweise wiederum durch Einschrauben oder durch Verwendung eines Bajonettverschlusses oder allgemein einer Formschlussverbindung, sodass die Gegenlöseformation die Öffnung der Arbeitsvorrichtung verschließt. Diese Öffnung ist bevorzugt die oben bereits genannte Aktuator-Durchgangsöffnung. Somit kann ein Längsende oder wenigstens ein Längsendbereich des Aktuatorglieds, welcher bei einer Bewegung von der eingezogenen in die ausgefahrene Position vorauseilt, die Löseformation des Aktuatorglieds sein, welche in Anlage an die Gegenlöseformation des Gegenlösebauteils gelangt. Die Kopplungsstruktur und die Gegenlöseformation können an unterschiedlichen axialen Endbereichen des Gegenlösebauteils ausgebildet sein.

Der Lösekraftübertragungseingriff oder/und Montagekraftübertragungseingriff der können einfach, aber sehr wirkungsvoll, ein Anlageeingriff sein. Bevorzugt besteht der Montagekraftübertragungseingriff nur für die Dauer eines Montagevorgangs oder/und besteht der Lösekraftübertragungseingriff nur für die Dauer eines Demontagevorgangs. Während einer bestimmungsgemäßen Bodenbearbeitung durch die Arbeitsvorrichtung liegt das Aktuatorglied an seinem außerhalb des Aktuatorgehäuses gelegenen Abschnitt bevorzugt frei von äußeren Eingriffen vor. So bleibt der Aktuator während des bestimmungsgemäßen Betriebs der Bodenbearbeitungsmaschine möglichst wenig oder gar unbelastet.

Gemäß dem Erfindungsgedanken reicht es grundsätzlich aus, wenn der Aktuator irgendwie an der Antriebsformation vorgesehen ist. Bevorzugt ist der Aktuator oder wenigstens sein Aktuatorglied aus Gründen möglichst symmetrischer Kraftwirkung zentral bezogen auf die Antriebsachse an der Antriebsformation vorgesehen. Bevorzugt ist das Aktuatorglied ein sich längs einer Längsachse erstreckendes Glied, wobei die Längsachse des Aktuatorglieds bevorzugt zur Antriebsachse koaxial ist.

Wie oben bereits dargelegt wurde, kann die Antriebsformation kann dazu dienen, den Aktuator vor äußeren Einflüssen zu schützen. Dies ist vor allen Dingen bei der bevorzugten Anwendung der Arbeitsvorrichtung zum Materialabtrag von einem Boden hilfreich, da die Arbeitsvorrichtung und auch Abschnitte der Antriebsformation im Falle einer abtragenden Bodenbearbeitung üblicherweise einer hohen Schmutzbelastung ausgesetzt sind. Es ist daher zum Schutz des Aktuators und zur effizienten Bauraumausnutzung bevorzugt, dass die Antriebsformation ein wenigstens abschnittsweise hohler Körper ist, in welchem der Aktuator aufgenommen ist.

Dabei ist außerdem zu berücksichtigen, dass der an der Antriebsformation vorgesehene Aktuator im Betrieb in der Regel mit der Antriebsformation mitdreht. Dies ist für die Versorgung des Aktuators mit Antriebsenergie für eine Aktuatorbetätigung nicht unproblematisch.

Dann, wenn der Aktuator ein elektromechanischer Aktuator ist, welcher elektrischen Strom als Eingangsenergie in mechanische Bewegungsenergie des Aktuatorglieds umsetzt, kann eine Versorgung des mit der Antriebsformation mitdrehenden Aktuators durch Schleifringe an der Antriebsformation erfolgen. Die Schleifringe sind bevorzugt gegenüber der übrigen Antriebsformation elektrisch isoliert, da die übrige Antriebsformation als Massepotenzial nutzbar ist.

Da der Aktuator jedoch für die Demontage dann genutzt wird, wenn die Antriebsformation stillsteht, also nicht rotiert, kann ganz allgemein die Energieversorgung des Aktuators durch eine Wandung der Antriebsformation hindurch dadurch erfolgen, dass ein Körperabschnitt der Antriebsformation von einer Energie-Durchgangsöffnung durchsetzt ist, an welcher oder durch welche hindurch eine Energie-Anschlussleitung zugänglich ist, die zur Übertragung von Antriebsenergie mit dem Aktuator verbunden ist.

Wegen der erleichterten Zugänglichkeit ist die Energie-Durchgangsöffnung bevorzugt im Bereich eines Längsendes der Antriebsformation, etwa in den jeweils letzten 30% der Erstreckungslänge der Antriebsformation, besonders bevorzugt an einem Längsende ausgebildet. Da das Einleitungslängsende der Antriebsformation durch das oben genannte Drehzahl untersetzende Getriebe belegt sein kann, ist die Energie-Durchgangsöffnung bevorzugt im Bereich des Funktionslängsendes vorgesehen. Bevorzugt ist daher wenigstens ein Abschnitt der Energie-Durchgangsöffnung im Deckel ausgebildet. Um die Ausbildung der Energie-Durchgangsöffnung fertigungstechnisch zu vereinfachen, ist bevorzugt die gesamte Energie-Durchgangsöffnung im Deckel ausgebildet.

Es soll jedoch nicht ausgeschlossen sein, dass die Energie-Durchgangsöffnung im Bereich des Einleitungslängsendes vorgesehen ist. Beispielsweise kann die Drehmoment in das Drehzahl untersetzende Getriebe einleitende Welle als Hohlwelle ausgebildet sein, so dass die Öffnung der Hohlwelle die Energie-Durchgangsöffnung sein kann.

Auch die Arbeitsvorrichtung weist bevorzugt eine zur Energie-Durchgangsöffnung korrespondierende Öffnung auf, durch welche hindurch die Energie-Anschlussleitung selbst dann zugänglich ist, wenn sich die Arbeitsvorrichtung fast oder vollständig in ihrer Betriebsposition befindet.

Die Antriebsformation als wenigstens abschnittsweise hohler Körper ist bevorzugt wenigstens axialabschnittsweise rohrförmig ausgebildet, beispielsweise als Rotationskörper, um unerwünschte Unwuchten zu vermeiden. Dabei bedeutet "rohrförmig" nicht streng zylindrisch, sondern "rohrförmig" schließt auch konische oder allgemein sich verjüngende oder aufweitende Rohrgestalten mit ein. Der Rotationskörper kann der oben erwähnte Rohrkörper sein.

Um ein möglichst großes Antriebsdrehmoment von der Antriebsformation auf die Arbeitsvorrichtung übertragen zu können, weist die Antriebsformation eine Antriebsdrehmoment übertragende Formschluss-Kopplungsanordnung zur Antriebsdrehmoment übertragenden formschlüssigen Kopplung mit einer Gegenkopplungsanordnung der Arbeitsvorrichtung auf.

Um die ordnungsgemäße Herstellung der Antriebsdrehmoment übertragenden formschlüssigen Kopplung zwischen Antriebsformation und Arbeitsvorrichtung für das die Arbeitsvorrichtung an die Antriebsformation montierende Personal zu erleichtern und einfach und effizient überprüfbar zu machen, ist die Formschluss-Kopplungsanordnung bevorzugt im Bereich eines ihrer Längsenden vorgesehen, etwa im Bereich der letzten 30 % der Längserstreckung der Antriebsformation. Besonders bevorzugt befindet sich die Formschluss-Kopplungsanordnung im Bereich ihres Funktionslängsendes, denn an dem Funktionslängsende wird eine formschlüssige Kopplung zwischen Antriebsformation und Arbeitsvorrichtung nicht durch Bauteile der Drehmomenteinleitung, wie etwa das oben genannte Drehzahl untersetzende Getriebe behindert. Höchst bevorzugt befindet sich die Formschluss-Kopplungsanordnung an dem Funktionslängsende selbst, etwa an dem Deckel, da es für eine Bedienperson einfach zugänglich am Maschinenkörper angeordnet sein kann. Da mit der Formschluss-Kopplungsanordnung bereits die Möglichkeit besteht, diese als Vorsprung an der Antriebsformation auszugestalten, welcher in eine Ausnehmung an der Arbeitsvorrichtung axial eingreift bzw. einragt, ist es vorteilhaft, die Energie-Durchgangsöffnung in der Formschluss-Kopplungsanordnung auszubilden, da dann im Falle einer Ausbildung der Gegenkopplungsanordnung als Durchgangsöffnung an der Arbeitsvorrichtung die Zugänglichkeit der Energie-Anschlussleitung selbst bei hergestellter Formschlusskopplung gewährleistet ist. Beispielsweise kann die Energie-Durchgangsöffnung in einem Formschluss-Kopplungsvorsprung der Formschluss-Kopplungsanordnung, diesen bevorzugt längs seiner Vorsprungslängsrichtung durchsetzend, ausgebildet sein.

Um mit der Formschluss-Kopplungsanordnung der Antriebsformation sowie mit der entsprechenden Gegenkopplungsanordnung der Arbeitsvorrichtung ein möglichst großes Drehmoment übertragen zu können, ist diese bevorzugt mit axialem Abstand von der Antriebsachse angeordnet.

Durch die außermittige Anordnung der Formschluss-Kopplungsanordnung an der Antriebsformation bleibt außerdem im Bereich der Antriebsachse Raum an der Antriebsformation, eine Zentrierformation anzuordnen, welche die Arbeitsvorrichtung während ihrer Verlagerung hin zur Betriebsposition relativ zur Antriebsformation und damit relativ zur Antriebsachse zentriert. Daher ist gemäß einer vorteilhaften Weiterbildung der vorliegenden Erfindung vorgesehen, dass die Antriebsformation im Bereich ihres Funktionslängsendes, insbesondere an ihrem Funktionslängsende, besonders bevorzugt am Deckel, eine Zentrierformation aufweist, welche zum formschlüssigen Zentriereingriff mit einer starr mit der Arbeitsvorrichtung verbundenen Gegenzentrierformation ausgebildet ist.

Zur einfachen und sicheren zentrierten Anordnung der Arbeitsvorrichtung an der Antriebsformation kann weiter vorgesehen sein, dass die Antriebsformation in einem ihrem Einleitungslängsende näher als ihrem Funktionslängsende gelegenen Bereich, einen sich vom Funktionslängsende weg aufweitenden Stützkonus aufweist, an welchem die Arbeitsvorrichtung in ihrer Betriebsposition über einen Gegenstützkonus abgestützt ist. Der Stützkonus zentriert den dem Antriebsaxialende näheren Endbereich der Arbeitsvorrichtung an der Antriebsformation bezüglich der Antriebsachse.

Der Stützkonus kann sich in Stufen oder/und ballig oder/und linear radial aufweiten. Der Gegenstützkonus der Arbeitsvorrichtung liegt an dem Stützkonus wegen der erhöhten Unzugänglichkeit der Abstützstelle zur Erleichterung von Montage und Demontage der Arbeitsvorrichtung nur an. Ein formschlüssiger Übertrag von Drehmoment erfolgt daher zwischen Stützkonus und Gegenstützkonus bevorzugt nicht.

Die Energie-Durchgangsöffnung kann in der Zentrierformation ausgebildet sein. Alternativ oder zusätzlich kann die Zentrierformation durch das Aktuatorglied durchsetzbar sein und eine entsprechende Durchgangsöffnung aufweisen. Bevorzugt ist bei gleichzeitiger Ausbildung von Durchgangsöffnungen für Energie und Aktuatorglied jene für das Aktuatorglied koaxial zur Antriebsachse ausgebildet, während die Energie-Durchgangsöffnung mit radialem Abstand zur Antriebsachse ausgebildet sein kann. Dadurch ist ein möglichst zentraler und damit gleichmäßiger Kraftangriff des Aktuatorglieds an der Arbeitsvorrichtung möglich. Für die Übertragung von Energie durch die Energie-Durchgangsöffnung kommt es auf Zentrizität nicht oder nicht so sehr an.

Innerhalb der Antriebsformation kann eine Energiequelle vorgesehen sein, welche durch die Rotation der Antriebsformation im Betrieb Energie an den Aktuator abgibt, wenn dieser von außen unzugänglich ist. Wenngleich die Energiequelle eine beliebige Energiequelle sein kann, ist sie bevorzugt eine hydraulische Energiequelle, da hydraulische Aktuatoren wegen ihrer hohen bauraumspezifischen Kraftausbeute als Aktuatoren bevorzugt sind.

So kann beispielsweise die drehende Antriebsformation eine in ihr aufgenommene Pumpe antreiben, welche an einem mit der Antriebsformation nicht oder mit Relativdrehgeschwindigkeit mitdrehenden Bauteil gehalten sein kann. Die Pumpe kann selbst die Energiequelle sein und Hydraulikflüssigkeit unmittelbar an den Aktuator liefern, oder die Pumpe kann einen Hydraulik-Druckspeicher beschicken, welcher mit dem Aktuator in Verbindung steht. Über eine zwischengeschaltete drehmomentabhängige Kupplung kann die Pumpe oder/und der Energiespeicher vor Überlastung geschützt sein. So kann ein Aktuator erforderlichenfalls dauerhaft Kraft ausüben, auch wenn keine Versorgungsleitung an seine Energie-Anschlussleitung angeschlossen ist. Bevorzugt ist der Aktuator nur dann betätigbar im Sinne einer gezielten Verlagerung des Aktuatorglieds relativ zum Aktuatorgehäuse, wenn die Energie-Anschlussleitung mit der Versorgungsleitung zur Übertragung von Energie verbunden ist. Die Steuerung des Aktuators kann dann durch Steuerung der Energieübertragung durch die Versorgungsleitung erfolgen. Bevorzugt ist der Aktuator an oder bevorzugt in der Antriebsformation frei von einer ihn aktiv steuernden Steuervorrichtung und ist nur dann mit einer ihn aktiv steuernden Steuervorrichtung verbunden, wenn die Energie-Anschlussleitung mit der Versorgungsleitung zur Übertragung von Energie verbunden ist.

Die Zentrierformation der Antriebsformation kann beispielsweise ein Zentrierzapfen sein, welcher sich in Richtung von der Antriebsformation weg, insbesondere von deren Einleitungslängsende weg, verjüngt. An der Zentrierformation kann wenigstens eine Kupplungsformation zur Kupplung einer Energie führenden Leitung mit der Energie-Anschlussleitung vorgesehen sein. Bevorzugt kann dann die Gegenzentrierformation eine Zentrierausnehmung sein.

In diesem Falle sind lediglich Energie führende Leitungen von außen an die Anschlussformation heranzuführen und mit dieser zu verbinden, um eine durchgängige Energie übertragende Leitung bis zum Aktuator bereitzustellen.

Ganz allgemein kann jedoch unabhängig von der Ausbildung einer Energie-Durchgangsöffnung in der Zentrierformation zur vereinfachten Kupplung der Energie-Anschlussleitung in der Antriebsformation mit einer Energie führenden Versorgungsleitung vorgesehen sein, dass die Energie-Anschlussleitung an ihrem vom Aktuator fernliegenden Ende eine Kupplungsformation aufweist, welche zur Energie übertragenden Kupplung mit einer Gegenkupplungsformation einer Versorgungsleitung ausgebildet ist.

Wenngleich die Versorgungsleitung eine beliebige externe Versorgungsleitung sein kann, ist die Versorgungsleitung bevorzugt ebenfalls eine Leitung der Bodenbearbeitungsmaschine, welche jedoch außerhalb der Antriebsformation gelegen ist und von einem Energiereservoir der Bodenbearbeitungsmaschine wegführt, mit welchem die Energie-Anschlussleitung des Aktuators in der Antriebsformation verbindbar ist. Grundsätzlich kann die Kupplungsformation der Anschlussleitung starr mit der Antriebsformation verbunden sein. Zur Erleichterung der Herstellung der Energie übertragenden Kupplung zwischen Kupplungsformation und Gegenkupplungsformation kann jedoch auch vorgesehen sein, dass ein vom Aktuator fernliegendes Ende der Energie-Anschlussleitung durch die Energie-Durchgangsöffnung hindurch in Richtung vom Aktuator weg aus der Antriebsformation herausziehbar ist, vorzugsweise gegen eine rückstellende Vorspannung herausziehbar ist.

Das genannte Energiereservoir kann eine Energiequelle oder/und ein Energiespeicher sein. Im bevorzugten Fall eines Hydraulikdruckreservoirs als dem Energiereservoir kann dieses eine Hydraulikpumpe, ein Hydraulikdruckspeicher oder eine auf einem vorbestimmten Hydraulikdruck arbeitende Zirkulationsleitung sein.

Nachzutragen ist, dass die oben als bevorzugt dargestellte zentrale Anordnung des Aktuators nicht die einzig mögliche Anordnung eines Aktuators ist. Vielmehr kann der Aktuator auch mehrteilig sein und mehrere, vorzugsweise gleichartige, Teil-Aktuatoren umfassen, von welchen jeder ein Teil-Aktuatorglied aufweist. Diese Teil-Aktuatoren können mit radialem Abstand von der Antriebsachse symmetrisch, etwa mit gleichen Winkelabständen, um die Antriebsachse herum angeordnet sein, um eine möglichst kippmomentfreie Kraftübertragung von den Aktuatorgliedern auf die Arbeitsvorrichtung bereitzustellen. Auch der aus mehreren Teil-Aktuatoren gebildete Aktuator kann in der oben beschriebenen Weise über Anschlussleitungen durch wenigstens eine Energie-Durchgangsöffnung in der Antriebsformation mit Energie versorgbar sein. Eine einzelne Energie-Versorgungsleitung kann sich im Inneren der Antriebsformation zu den einzelnen Teil-Aktuatoren hin verzweigen.

Unabhängig von der Ausgestaltung des Aktuators als einzelner Aktuator oder als Mehrzahl von Teil-Aktuatoren weist die Antriebsformation im Fall eines hydraulischen Aktuators bevorzugt für jede Wirkungsrichtung des Aktuators eine Energie-Durchgangsöffnung auf. Das ist für einen einfachwirkenden Aktuator eine Energie-Durchgangsöffnung und für einen doppeltwirkenden Aktuator zwei. Die Energie-Anschlussleitungen von einer Mehrzahl von Teil-Aktuatoren bilden von der Kupplungsformation ausgehend zunächst bevorzugt eine gemeinsame Leitung und verzweigen sich dann zu den einzelnen Teil-Aktuatoren.

Wie oben bereits ausgesagt wurde, kann der Aktuator ein elektromechanischer Aktuator sein, beispielsweise in Form eines elektromotorisch betriebenen Spindel- oder Gewindetriebs. Ebenso kann der Aktuator ein fluidmechanischer Aktuator sein, wobei aus Gründen höherer raumspezifischer Kraftbereitstellung hydraulische Aktuatoren als fluidmechanische Aktuatoren bevorzugt sind. Bevorzugt ist der Aktuator eine Kolben-Zylinder-Anordnung, etwa eine einfachwirkende oder eine doppeltwirkende Kolben-Zylinder-Anordnung. Das Aktuatorglied ist dann eine Kolbenstange. Bei der Verwendung mehrerer Teil-Aktuatoren kann auch eine gemischte Ausbildung von Teil-Aktuatoren verwendet werden, von welchen ein Teil fluidmechanische Teil-Aktuatoren sind und ein anderer Teil elektromechanische Aktuatoren.

In der Antriebsformation kann ein Energie-Ausgleichs- oder Zwischenreservoir vorgesehen sein, insbesondere in Form eines hydraulischen Ausgleichs- oder Zwischenspeichers, um vor allem bei doppeltwirkenden hydraulischen Kolben-Zylindereinheiten durch Temperaturunterschiede in der Hydraulikflüssigkeit induzierte Druckunterschiede abmildern oder ausgleichen zu können. Derartige Temperaturunterschiede können meteorologisch oder auch durch bei der Bodenbearbeitung dissipierte Energie bewirkt sein.

Zur besonders einfachen und schnellen, jedoch wirksamen Positionssicherung der Arbeitsvorrichtung in der Betriebsposition kann vorgesehen sein, dass die Arbeitsvorrichtung durch eine zentrale Schraubanordnung, insbesondere Zentralschraube, mit zu der Antriebsachse koaxialer Schraubachse axial in ihrer Betriebsposition an der Antriebsformation sicherbar ist.

Dabei kann die zentrale Schraubanordnung dann, wenn sich die Arbeitsvorrichtung in der Betriebsposition befindet, in das Aktuatorglied oder in die Antriebsformation, dort etwa in die Zentrierformation einschraubbar sein. Als Zentrierzapfen bietet die Zentrierformation eine ausreichende Gewindeeingriffslänge für die Schraubanordnung. So wird eine unnötige Schwächung der Antriebsformation durch zu viele Öffnungen oder Ausnehmungen vermieden.

Grundsätzlich kann die Antriebsachse beliebig am Maschinenkörper orientiert sein, bevorzugt ist sie parallel zum Aufstands-Untergrund orientiert, um über die axiale Erstreckung der Arbeitsvorrichtung hinweg einen homogenen Bearbeitungseingriff der Arbeitsvorrichtung mit dem Boden bewirken zu können. Bevorzugt ist die Antriebsachse in Maschinenquerrichtung der Bearbeitungsmaschine orientiert, um durch einen Fahrantrieb der Bodenbearbeitungsmaschine einen zur Antriebsachse orthogonalen Vortrieb der Arbeitsvorrichtung relativ zum Boden bewirken zu können.

Bevorzugt ist die Arbeitsvorrichtung eine Fräswalze oder ein Fräsrotor, umfassend ein radial innen zumindest abschnittsweise hohles Fräswalzenrohr, auf dessen radial nach außen weisender Seite Material abtragende Werkzeuge, wie Fräsmeißel und zu deren vereinfachtem Austausch Meißelhalter oder/und Meißelwechselhalter, in an sich bekannter Weise angeordnet sein können. Die Arbeitsvorrichtung kann relativ zum Maschinenkörper oder gemeinsam mit dem zum Maschinenkörper beitragenden Maschinenrahmen zum Aufstands-Untergrund hin absenkbar und von diesem abhebbar sein.

Die vorliegende Erfindung wird nachfolgend anhand der beiliegenden Zeichnungen näher erläutert werden. Es stellt dar:
- Figur 1: eine grobschematische Seitenansicht einer erfindungsgemäßen Ausführungsform einer Bodenbearbeitungsmaschine in Form einer Großfräse in einer Stellung für einen Abroll-Fahrbetrieb,
- Figur 2: eine schematische Längsschnittansicht durch die Arbeitsvorrichtung der Bodenbearbeitungsmaschine von Figur 1 in einem für eine Bodenbearbeitung betriebsbereiten Zustand, wobei die Schnittebene die Rotationsachse der Arbeitsvorrichtung enthält,
- Figur 3: eine vergrößerte Darstellung des rechten Endes der in Figur 2 gezeigten Antriebsformation und Arbeitsvorrichtung, hergerichtet für ein Herstellen oder/und ein Lösen einer axialen Positionssicherung der Arbeitsvorrichtung,
- Figur 4: eine der Ansicht von Figur 3 entsprechende Darstellung einer Variante der ersten Ausführungsform von Antriebsformation und Arbeitsvorrichtung gemäß den Figuren 2 und 3, hergerichtet für eine Demontage der Arbeitsvorrichtung von der Antriebsformation,
- Figur 5: die Antriebsformation und Arbeitsvorrichtung von Figur 4 während der Demontage der Arbeitsvorrichtung,
- Figur 6: die Antriebsformation und Arbeitsvorrichtung der Figuren 4 und 5 hergerichtet für eine Montage der Arbeitsvorrichtung an die Antriebsformation,
- Figur 7: die Variante der ersten Ausführungsform von Antriebsformation und Arbeitsvorrichtung gemäß Figuren 2 und 3 mit der Arbeitsvorrichtung in der Vorbereitungsposition,
- Figur 8: eine der Ansicht von Figur 3 entsprechende Darstellung einer zweiten Ausführungsform von Antriebsformation und Arbeitsvorrichtung, hergerichtet für ein Herstellen oder/und ein Lösen einer axialen Positionssicherung der Arbeitsvorrichtung,
- Figur 9: die Antriebsformation und Arbeitsvorrichtung von Figur 8 während der Demontage der Arbeitsvorrichtung in einer Schnittansicht in der Schnittebene XI-XI von Figur 10,
- Figur 10: die Antriebsformation und Arbeitsvorrichtung von Figur 9 bei Betrachtung in axialer Richtung,
- Figur 11: eine Schraube mit einer eine Kopplungsstruktur der zweiten Ausführungsform verkörpernden Unterlegscheibe und
- Figur 12: eine der Ansicht von Figur 3 entsprechende Darstellung einer dritten Ausführungsform von Antriebsformation und Arbeitsvorrichtung mit der Arbeitsvorrichtung in der Betriebsposition.

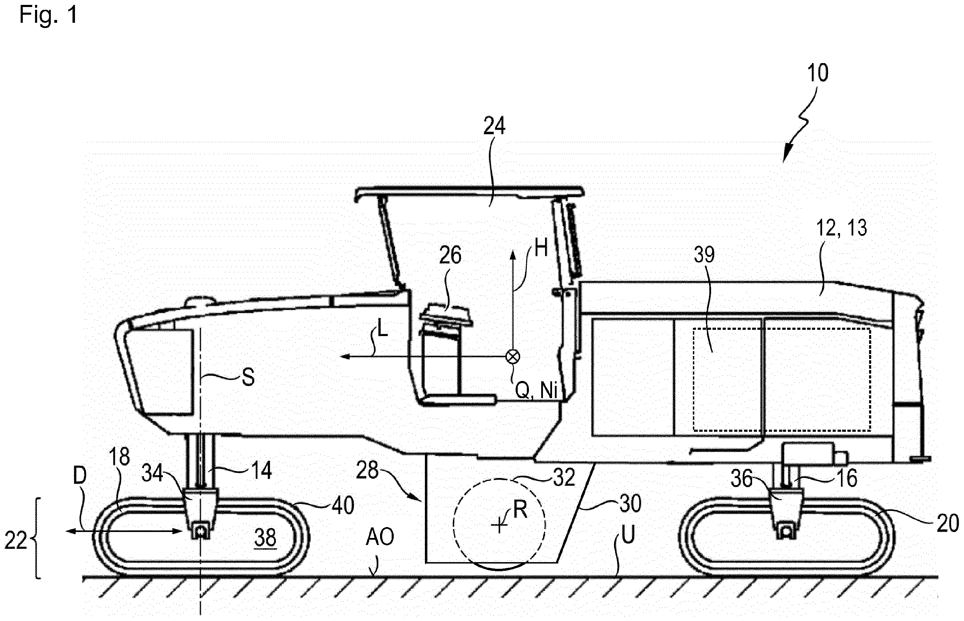

In Figur 1 ist eine erfindungsgemäße Ausführungsform einer Bodenbearbeitungsmaschine in Gestalt einer Boden- oder Straßenfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und die mit dem Maschinenrahmen verbundenen, gegebenenfalls relativ zu diesem beweglichen, Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Antriebsseite der Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse der Maschine 10, die Maschinenlängsrichtung L verläuft parallel zur Rollachse und die Maschinenquerrichtung Q verläuft parallel zur Nickachse Ni. Die Nullseite der Maschine 10 ist vom Betrachter der Figur 1 abgewandt.

Die Bodenbearbeitungsmaschine 10 kann einen Fahrstand 24 aufweisen, von dem aus ein Maschinenführer über ein Schaltpult 26 die Maschine 10 steuern kann.

Unter dem Maschinenrahmen 12 ist eine Arbeitsbaugruppe 28 angeordnet, hier beispielhaft als Fräsbaugruppe 28 mit einer in einem Fräswalzenkasten 30 aufgenommenen Fräswalze 32, die um eine in Maschinenquerrichtung Q verlaufende Fräsachse R rotierbar ist, um damit als Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Die Fräswalze 32 ist daher eine Arbeitsvorrichtung im Sinne der vorliegenden Anmeldung.

Die Höhenverstellbarkeit des Maschinenrahmens 12 durch die Hubsäulen 14 und 16 dient auch der Einstellung der Fräs- oder allgemein Arbeitstiefe der Maschine 10 bei der Bodenbearbeitung. Es handelt sich bei der beispielhaft dargestellten Bodenbearbeitungsmaschine 10 um eine Großfräse, für die die Anordnung der Fräseinrichtung 28 in Maschinenlängsrichtung L zwischen den vorderen und den hinteren Laufwerken 18 bzw. 20 typisch ist. Derartige Großfräsen oder auch bodenabtragende Maschinen im Allgemeinen weisen üblicherweise ein Transportband auf, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die vorderen Hubsäulen 14 sind in weiterhin an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 verbunden. Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die Laufwerke 18 und 20 sind motorisch angetrieben, in der Regel durch einen nicht dargestellten Hydromotor.

Die Antriebskraftquelle der Maschine 10 bildet eine am Maschinenrahmen 12 aufgenommene Brennkraftmaschine 39. Durch sie wird die Fräswalze 32 im dargestellten Ausführungsbeispiel zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10.

Das Laufwerk 18 mit einer durch den Doppelpfeil D angedeuteten Laufrichtung weist im dargestellten Beispiel eine radial innere Aufnahme-und Führungsstruktur 38 auf, an der eine umlaufbare Laufkette 40 angeordnet und zur Umlaufbewegung geführt ist.

Das Laufwerk 18 ist durch eine nicht näher dargestellte Lenkvorrichtung um eine Lenkachse S drehbar. Bevorzugt zusätzlich, aber auch alternativ kann die Hubsäule 16 und mit ihr das Laufwerk 20 durch eine Lenkvorrichtung um eine zur Lenkachse S parallele Lenkachse drehbar sein.

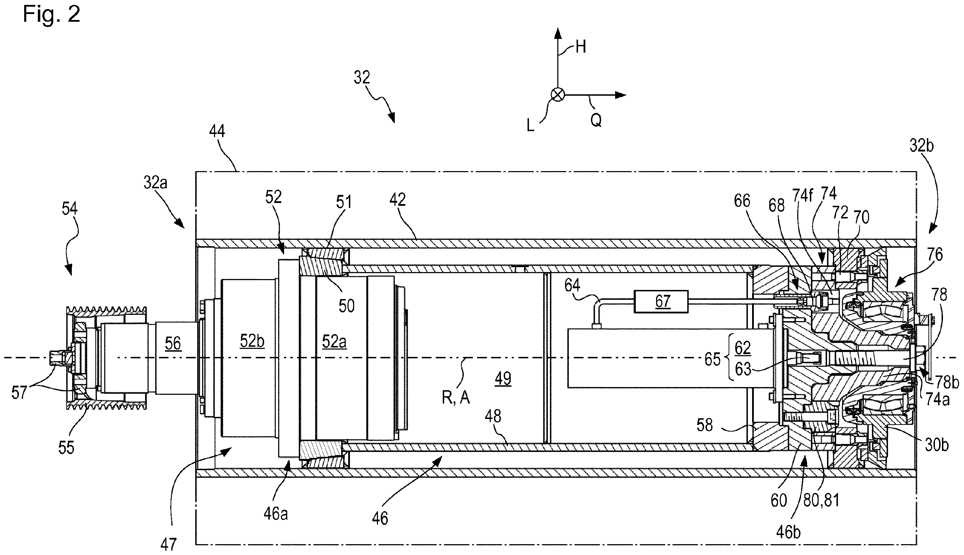

In Figur 2 ist eine schematische Längsschnittansicht der Fräswalze 32 von Figur 1 in einer die Rotationsachse R der Fräswalze enthaltenden Schnittebene gezeigt.

Die Fräswalze 32 umfasst ein im Wesentlichen zylindrisches Fräswalzenrohr 42, auf deren radial äußerer Seite in an sich bekannter Weise Meißelhalter oder Meißelwechselhalter mit darin wiederum auswechselbar aufgenommenen Fräsmeißeln vorgesehen sind. Eine strichpunktierte Linie 44 gibt den Wirkdurchmesser (Schnittkreis-Zylinder) der Fräswalze 32 an, definiert durch die Fräsmeißelspitzen der nicht dargestellten Fräsmeißel. Die Fräswalze 32 befindet sich in einer zur bodenabtragenden Bearbeitung betriebsbereiten Konfiguration. Die Fräswalze 32 ist hierzu mit einer Antriebsformation 46 Drehmoment übertragend verbunden. Die Fräswalze 32 umgibt die Antriebsformation 46 radial außen.

In einem Getriebegehäuse 52 ist ein drehzahluntersetzendes und drehmomentübersetzendes Planetengetriebe aufgenommen. Ein in Figur 2 rechter Teil 52a des Getriebegehäuses 52 ist mit dem Hohlrad des Planetengetriebes zur gemeinsamen Drehung gekoppelt. Ein in Figur 2 linker Teil 52b des Getriebegehäuses 52 ist maschinenrahmenfester Teil des Maschinenkörpers 13.

Die Antriebsformation 46 umfasst ein Innenrohr 48, einen Stützkonus 50 und den relativ zum Maschinenrahmen 12 drehbaren Teil 52a des Getriebegehäuses 52. Der Stützkonus 50 und das Innenrohr 48 sind miteinander und als Baugruppe mit dem Getriebegehäuseteil 52a zur gemeinsamen Drehung um die Antriebsachse A der Antriebsformation 46 verbunden. Im betriebsbereiten Zustand der Fräswalze 32 sind die Antriebsachse A der Antriebsformation 46 und die Rotationsachse R der Fräswalze 32 koaxial.

Das Fräswalzenrohr 42 ist durch einen negativ-konischen Gegenstützkonus 51 am Stützkonus 50 der Antriebsformation 46 abgestützt.

Weiter ist die Antriebsformation 46 mit einer Antriebsdrehmoment-Übertragungsanordnung 54 verbunden, welche im dargestellten Beispiel unter anderem eine Riemenscheibe 55 umfasst. Die Riemenscheibe 55 ist mit einer in Figur 2 nicht dargestellten Eingangswelle des Planetengetriebes im Getriebegehäuse 52 verbunden. Die mit der Riemenscheibe 55 zur gemeinsamen Drehung verbundene Eingangswelle verläuft durch einen im dargestellten Ausführungsbeispiel maschinenrahmenfesten Wellentunnel 56, welcher mit dem Getriebegehäuseteil 52b starr verbunden ist.

Über eine Kopplungsformation 57 kann ein gesondert vom Antriebsmotor 39 der Antriebsvorrichtung 46 ausgebildeter Drehantrieb an die Antriebsformation 46 zur Übertragung von Antriebsdrehmoment angekoppelt werden. Lediglich der Vollständigkeit halber sei angemerkt, dass die Kopplungsformation 57 an einer beliebigen Stelle der Antriebsdrehmoment-Übertragungsanordnung 54 vorgesehen sein kann, solange nur durch Betätigung der Kopplungsformation 57 die Antriebsformation in Drehung um die Antriebsachse A versetzbar ist. Der an die Kopplungsformation 57 ankoppelbare Drehantrieb (nicht dargestellt) kann auch ein manueller Drehantrieb sein.

Die Antriebsformation 46 bildet mit der maschinenrahmenfesten Baugruppe aus Getriebegehäuseteil 52b und Wellentunnel 56 eine Antriebsbaugruppe 47, welche von einem Antriebsaxialende 32a der Fräswalze 32 her in die Fräswalze 32 axial einragt. Bevorzugt überragt die Fräswalze 32 die Antriebsformation 46 als den relativ zum Maschinenrahmen 12 drehbaren Teil der Antriebsbaugruppe 47 axial zu beiden Seiten.

Die Antriebsbaugruppe 47, und mit ihr die Antriebsformation 46, ist im Bereich des Wellentunnels 56 am Maschinenkörper 13 gelagert. Die Lagerung der Antriebsformation 46 im Bereich des drehbaren Getriebegehäuseteils 52a bildet ein Festlager der Antriebsformation 46. Das näher an der Riemenscheibe 55 gelegene axiale Längsende 46a der Antriebsformation 46 ist in der vorliegenden Anmeldung auch als Einleitungsängsende 46a bezeichnet, da im vorliegenden Ausführungsbeispiel über dieses Einleitungslängsende 46a Antriebsdrehmoment in die Antriebsformation 46 eingeleitet wird.

Die Fräswalze 32 erstreckt sich axial längs ihrer im betriebsbereiten Zustand mit der Antriebsachse A zusammenfallenden Rotationsachse (Fräsachse) R zwischen dem in Figur 2 der Antriebsdrehmoment-Übertragungsanordnung 54 näher gelegenen Antriebsaxialende 32a und einem dem Antriebsaxialende entgegengesetzten Sicherungsaxialende 32b, welches der axialen Positionssicherung der Fräswalze 32 im betriebsbereiten Zustand näher gelegen ist.

An dem dem Einleitungslängsende 46a axial entgegengesetzten Funktionslängsende 46b weist die Antriebsformation 46 einen Tragring 58 und einen mit dem Tragring 58 verbundenen endseitigen Deckel 60 auf. Der Tragring 58 ist im dargestellten Ausführungsbeispiel schweißtechnisch mit dem Innenrohr 48 verbunden. Der Deckel 60 kann mit dem Tragring 58 ebenfalls verschweißt oder auch verschraubt sein. Er ist mit dem Tragring 58 und dem Innenrohr 48 zur gemeinsamen Drehung um die Antriebsachse A verbunden.

Der Tragring 58 kann in unterschiedlicher Art und Weise ausgestaltet sein. Auf seine Gestalt kommt es nicht wesentlich an. Er ist in den Darstellungen der vorliegenden Anmeldung jeweils in geringfügig abweichender Gestalt gezeigt, was auf die vorliegende Erfindung jedoch keinerlei Einfluss hat.

Entsprechendes gilt für die radial äußeren Bereiche des Deckels 60, welche mit dem Tragring 58 zur Bildung einer drehfesten Verbindung zusammenwirken.

In dem in Figur 2 dargestellten ersten Ausführungsbeispiel ist im Inneren 49 der Antriebsformation 46 ein Hydraulikzylinder 62 am Deckel 60 aufgenommen, welcher mit seiner Hydraulikzylinderachse koaxial zur Antriebsachse A der Antriebsformation 46 angeordnet ist. Der Hydraulikzylinder 62 ist mittels einer Hydraulik- oder allgemein Energie-Anschlussleitung 64 durch eine Energie-Durchgangsöffnung 66 im Deckel 60 hindurch mit Hydraulikfluid versorgbar. Der Hydraulikzylinder 62 und die aus dem Hydraulikzylinder 62 hydraulisch aus- und einfahrbare Kolbenstange 63 bilden einen an, und im vorliegenden bevorzugten Fall sogar in der Antriebsformation 46 angeordneten Aktuator 65 im Sinne der Beschreibungseinleitung. Die Kolbenstange 63 ist ein relativ zum Hydraulikzylinder 62 als Aktuatorgehäuse translatorisch bewegliches Aktuatorglied im Sinne der Beschreibungseinleitung. Ihr Verlagerungsweg relativ zum Hydraulikzylinder 62 beträgt wenigstens 150 mm. In einer bevorzugten Ausführungsform beträgt der Verlagerungsweg der Kolbenstange 63 wenigstens 300 mm.

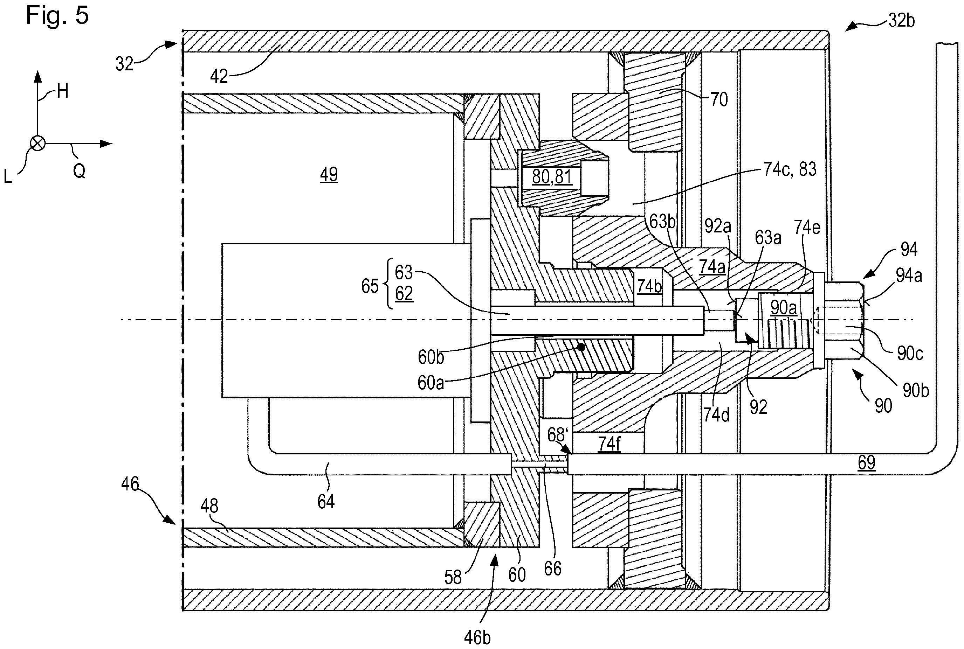

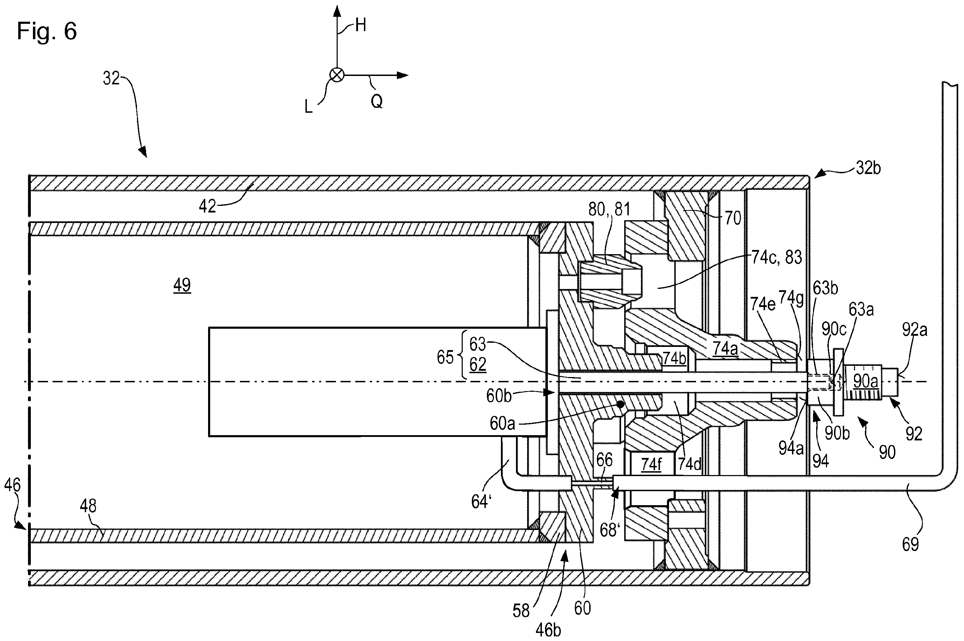

Die Hydraulik-Anschlussleitung 64 ist an ihrem einen Längsende mit dem Hydraulikzylinder 62 verbunden und kann in die Energie-Durchgangsöffnung 66 einragen oder diese durchsetzen und an ihrem vom Hydraulikzylinder 62 fern liegenden anderen Längsende in einer Kupplungsformation 68 enden. Eine weitere Hydraulik-Anschlussleitung, die in Fig. 6 als Hydraulik-Anschlussleitung 64' bezeichnet und untern erläutert ist, ist auch in der Ausführungsform von Fig. 2 vorhanden, jedoch nicht dargestellt. Sie ist mit Ausnahme ihres Anschlussortes am Hydraulikzylinder 62 identisch zur Leitung 64 aufgebaut und endet ebenfalls in einer Kupplungsformation. Die Kupplungsformation 68 und die weitere Kupplungsformation sind zur Versorgung des Hydraulikzylinders 62 mit jeweils einer Gegenkupplungsformation einer anderen von zwei vorhandenen, in Figur 2 jedoch nicht dargestellten Versorgungsleitungen verbindbar, um die Kolbenstange 63 aus dem Hydraulikzylinder 62 aus- und in diesen wieder einfahren zu können (siehe beispielsweise Versorgungsleitungen 69 und 169 in den Figuren 5, 6, 9 und 10). Der Aktuator 65 ist somit nur arbeitsbereit, wenn der Hydraulikzylinder mit einem einen Hydraulikdruck bereitstellenden Hydraulikdruckreservoir, etwa einer Hydraulikpumpe, einem Hydraulikdruckspeicher oder einer Zirkulationsleitung mit vorbestimmtem Hydraulikdruckniveau, verbunden und durch dieses versorgbar ist.

Zum Ausgleich von temperaturschwankungsinduzierten Druckänderungen im Hydraulikfluid des Hydraulikzyllinders 62 und seiner Hydraulik-Anschlussleitungen, sind die Hydraulikleitungen mit Ausgleichsspeichern verbunden. Ein Ausgleichs oder Zwischenspeicher 67 ist beispielhaft an der Hydraulik-Anschlussleitung 64 dargestellt (nur in Figur 2).

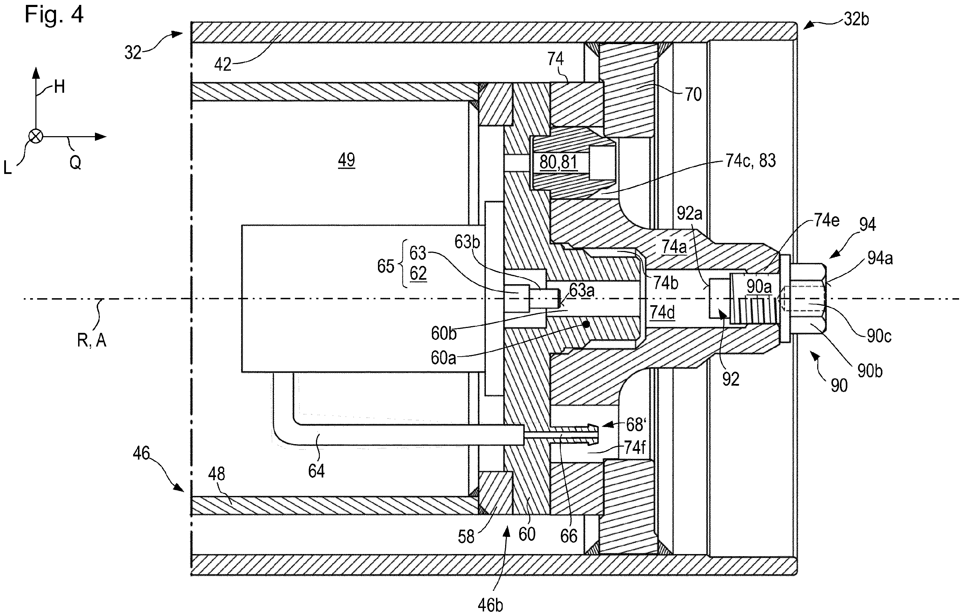

Mit der Kolbenstange 63 kann, nachdem die in Figur 2 erkennbare axiale Positionssicherung der Fräswalze 32 an der Antriebsformation 46 gelöst ist, die Fräswalze 32 zur Demontage von der Antriebsformation 46 axial weggedrückt oder/und zur Montage auf die Antriebsformation 46 aufgezogen werden, wie weiter unten im Zusammenhang mit den Figuren 4 bis 6 näher erläutert werden wird.

In einem dem Sicherungsaxialende 32b näher gelegenen Bereich ist radial innen an dem Fräswalzenrohr 42 ein Verbindungsring 70 angeordnet und zur gemeinsamen Drehung mit dem Fräswalzenrohr 42 verbunden, im dargestellten Beispiel durch eine Schweißverbindung.

Das Fräswalzenrohr 42 ist über den Verbindungsring 70 mittels Schraubbolzen 72 mit einem Verbindungsflansch 74 starr verbunden.

An dem Verbindungsflansch 74 ist, vorzugsweise einstückig mit diesem, ein Lagerzapfen 74a vorgesehen, welcher von einem Verbindungsbereich des Verbindungsflansches 74 mit dem Verbindungsrohr 70 ausgehend axial zum Sicherungsaxialende 32b hin auskragt.

An dem Lagerzapfen 74a ist im betriebsbereiten Zustand der Fräswalze 32 ein die Antriebsformation 46 abstützendes Loslager 76 angeordnet. Das vom Festlager axial mit Abstand angeordnete Loslager 76 ist axial vom Lagerzapfen 74a abziehbar.

Bevorzugt liegt in der Betriebsposition der Fräswalze (Arbeitsvorrichtung) 32 - und auch schon vor Erreichen der Betriebsposition - eine Öffnung 74f des Verbindungsflansches 74 derart relativ zur der Energie-Durchgangsöffnung 66, vorzugsweise axial fluchtend mit dieser, dass die Kupplungsformation 68 auch durch die Öffnung 74f hindurch zur Versorgung des Hydraulikzylinders 62 mit Hydraulikflüssigkeit zugänglich ist.

Das Loslager 76 kann beispielsweise in einer Seitenplatte bzw. Seitentür 30a aufgenommen sein, welche Teil des Fräswalzenkastens 30 ist und der Fräswalze 32 am Sicherungsaxialende 32b stirnseitig axial gegenüberliegt. In Figur 2 ist lediglich ein mit einer solchen Seitenwand 30a starr verbundenes Bauteil 30b als Lagerfläche für den äußeren Lagerring des Loslagers 76 gezeigt.

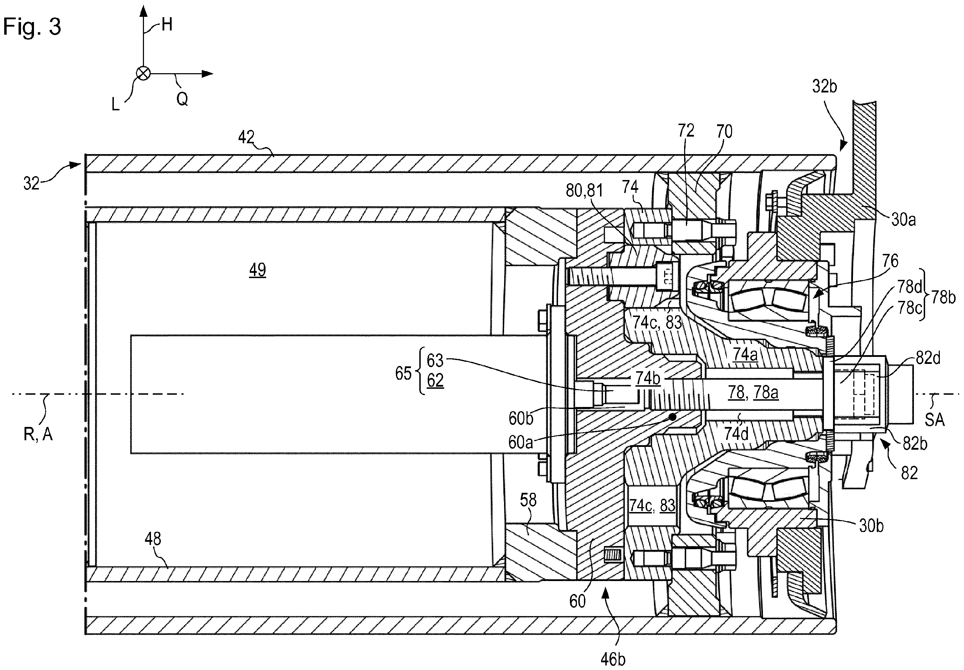

Wie ausführlicher zu der vergrößerten Darstellung des Funktionslängsendes 46b der Antriebsformation in Figur 3 erläutert werden wird, ist die Fräswalze 32 an der Antriebsformation 46 durch lediglich eine einzige zentrale Sicherungsschraube 78 in ihrer axialen Position gesichert. Die Sicherungsschraube 78 bildet ein Beispiel für eine in der Beschreibungseinleitung erwähnte Schraubanordnung.

Die Fräswalze 32 ist somit über den Gegenabstützkonus 51 und über den Verbindungsflansch 74 koaxial zur Antriebsachse A an der Antriebsformation 46 abgestützt.

Am Deckel 60 ist, vorzugsweise einstückig mit diesem, eine Zentrierformation 60a in Gestalt eines Zentrierzapfens ausgebildet, welcher vom Deckel 60 in Richtung vom Einleitungslängsende 46a der Antriebsformation 46 weg, zum Sicherungsaxialende 32b der Fräswalze 32 hin absteht. Der Zentrierzapfen 60a ragt in eine als Zentrierausnehmung ausgebildete Gegenzentrierformation 74b am Verbindungsflansch 74 ein und zentriert so das starr mit dem Verbindungsflansch 74 verbundene Fräswalzenrohr 42 bezüglich der Antriebsachse A. Der Verbindungsflansch 74 ist daher ein Zentrierbauteil. Der Deckel 60 weist eine zentrale, ihn axial durchsetzende Ausnehmung 60b auf, welche von der Kolbenstange 63 in Figur 2 und Figur 3 axial durchsetzbar ist.

Auf dem dem Sicherungsaxialende 32b zugewandten Endbereich des Zentrierzapfens 60a ist die Ausnehmung 60b im Zentrierzapfen 60a mit einem Innengewinde versehen, in welches die zentrale Sicherungsschraube 78 eingedreht ist.

Wenngleich die Schraubanordnung anstelle einer einstückigen Sicherungsschraube 78 auch mehrteilig ausgeführt sein kann, beispielsweise durch eine Gewindestange und eine Sicherungsmutter, gegebenenfalls mit einer Unterlegscheibe, ist die einstückige Schraubanordnung in der in Figur 3 gezeigten Gestalt wegen ihrer einfachen und sicheren Handhabung und Verstaubarkeit bevorzugt. Die zentrale Sicherungsschraube 78 umfasst einen Gewindeschaft 78a mit Außengewinde und einen radial über den Gewindeschaft 78a vorstehenden Schraubenkopf 78b mit einer an sich bekannten Werkzeugangriffsformation 78c, beispielhaft in Gestalt eines Außen-Sechskant-Polyeders. Zwischen dem Gewindeschaft 78a und der Werkzeugangriffsformation 78c ist ein Anlageabschnitt 78d als axial schmaler, radial jedoch ausladender Zylinder ausgebildet. Dieser Anlageabschnitt 78d ist im vorliegenden Beispiel einstückig mit Gewindeschaft 78a und Werkzeugangriffsformation 78c ausgebildet, kann jedoch alternativ auch als gesonderte Unterlegscheibe vorgesehen sein.

Der Schraubenkopf 78b spannt so den Lagerzapfen 74a und mit diesem den Verbindungsflansch 74 und wiederum mit diesem den Verbindungsring 70 und das Fräswalzenrohr 42 axial gegen den Stützkonus 50 der Antriebsformation 46.

Somit kann, wenn die Fräswalze 32 axial zwar mit Entfernung von ihrer Betriebsposition, jedoch dennoch mit gewisser Vorpositionierung in einer Vorbereitungsposition angeordnet wird, etwa derart, dass das vom Tragring 58 fern liegende Längsende des Zentrierzapfens 60a bereits in die Zentrierausnehmung 74b des Verbindungsflansches 74 einragt, die Fräswalze 32 mit der Zentrierschraube 78 axial in ihre Betriebsposition bewegt werden. Es ist lediglich darauf zu achten, dass am Deckel 60 mit radialem Abstand von der Antriebsachse A vorgesehene Zapfen 80 in hierfür vorgesehene Ausnehmungen 74c des Verbindungsflansches 74 gelangen können, um so den Deckel 60 mit dem Verbindungsflansch 74 zur Übertragung von Drehmoment zwischen der Antriebsformation 46 und der Fräswalze 32 zu koppeln.

Die Zapfen 80, von welchen bevorzugt einer Mehrzahl in Umfangsrichtung um die Antriebsachse A vorgesehen ist, bilden eine Formschluss-Kopplungsanordnung 81 im Sinne der obigen Beschreibungseinleitung. Besonders bevorzugt sind die Zapfen 80 in Umfangsrichtung äquidistant angeordnet.

Die Ausnehmungen 74c, in welche die Zapfen 80 im betriebsbereiten Zustand der Fräswalze 32 axial einragen, bilden eine Gegenkopplungsanordung 83 im Sinne der obigen Beschreibungseinleitung.

Der Gewindeschaft 78a der Sicherungsschraube 78 durchsetzt auch einen Schaftkanal 74d, welcher ausgehend von der Zentrierausnehmung 74b den Zentrierzapfen 74a am Verbindungsflansch 74 axial durchsetzt. Die Zentrierausnehmung 74b und der Schaftkanal 74d bilden gemeinsam einen zusammenhängenden Durchgang durch den Verbindungsflansch 74, welcher von der Kolbenstange 63 vollständig durchsetzbar ist, wenn diese vollständig aus dem Hydraulikzylinder 62 ausgefahren wird. Die Zentrierausnehmung 74b und der Schaftkanal 74d bilden zusammen eine Aktuator-Durchgangsöffnung im Sinne der Beschreibungseinleitung.

Zwar kann mithilfe der Sicherungsschraube 78 oder einem gesonderten Lösebauteil (in der vorliegenden Anmeldung nicht dargestellt) die Fräswalze 32 manuell-mechanisch auf die Antriebsformation 46 in die Betriebsposition aufgeschoben und von dieser abgezogen werden. Jedoch ist auch ein Verlagern der Fräswalze 32 von einer Vorbereitungsposition in Richtung zur Betriebsposition hin, vorzugsweise bis in die in den Figuren 2 und 3 gezeigte Betriebsposition, durch den Aktuator 65 erheblich erleichtert und erfordert im Regelfall keinen weiteren mechanischen Eingriff, mit Ausnahme der Sicherung der Fräswalze 32 in der Betriebsposition bzw. das Lösen der axialen Positionssicherung der Fräswalze bei der Demontage.

Figur 3 zeigt die Ansicht von Figur 2 mit einer auf den Schraubenkopf 78b aufgesteckten Schraubmoment-Abstützanordnung 82. Die Schraubmoment-Abstützanordnung 82 ist nicht geschnitten.

Die Schraubmoment-Abstützanordnung 82 dient zum Herstellen und Lösen einer axialen Positionssicherung der Fräswalze 32 an der Antriebsformation 46. Die Schraubmoment-Abstützanordnung 82 erstreckt sich längs einer Bauteilachse SA, welche bei auf die Sicherungsschraube 78 aufgesteckter Schraubmoment-Abstützanordnung 82 koaxial mit der Antriebsachse A ist.

Die Schraubmoment-Abstützanordnung 82 ist als Überwurfwerkzeug mit einem Eingriffsbereich ausgebildet, welcher im dargestellten Beispiel als Ausnehmung in zur Werkzeugangriffsformation 78c der Sicherungsschraube 78 komplementärer Gestalt ausgebildet ist, in diesem Falle also als Innen-Sechskant-Polyeder. Die Schraubmoment-Abstützanordnung 82 kann somit axial mit ihrem Eingriffsbereich auf den Schraubenkopf 78b der Sicherungsschraube 78 aufgesteckt werden. Somit ist zwischen der Schraube 78 und der Schraubmoment-Abstützanordnung 82 ein Drehmoment formschlüssig übertragbar.

Der Eingriffsbereich ist an einem Eingriffsabschnitt 82b der Schraubmoment-Abstützanordnung 82 vorgesehen. Von diesem Eingriffsabschnitt 82b stehen in diametraler Gegenüberstellung beispielhaft zwei Vorsprünge radial (bezüglich der Bauteilachse SA) vor. Der von den beiden Vorsprüngen in Figur 3 einzig gezeigte Vorsprung 82d erstreckt sich dabei in Figur 3 orthogonal von der Zeichenebene der Figur 3 zum Betrachter hin. Der andere Vorsprung liegt in Figur 3 hinter der Zeichenebene und wird durch den Eingriffsabschnitt 82b verdeckt. Ein mit der Schraubmoment-Abstützanordnung 82 zusammenwirkendes Gegenabstützbauteil ist in Figur 3 nicht gezeigt, wird aber nachfolgend kurz beschrieben.

In dem in Figur 3 gezeigten auf die zentrale Sicherungsschraube 78 aufgesteckten Zustand der Schraubmoment-Abstützanordnung 82 ist die Schraubmoment-Abstützanordnung 82 radial außen von einem Gegenabstützbauteil umgeben, welches fest mit der Seitenplatte 30a des Fräswalzenkastens 30 verbunden ist, etwa durch Verschraubung.

Das Gegenabstützbauteil weist eine zentrale Ausnehmung auf, durch welche hindurch der Kopf 78b der Sicherungsschraube 78 von außen, also von außerhalb des Maschinenkörpers 13, axial für ein Aufstecken der Schraubmoment-Abstützanordnung 82 darauf und ein Abziehen davon zugänglich ist.

Nach Aufstecken der Schraubmoment-Abstützanordnung 82 auf die Sicherungsschraube 78 gelangen durch Drehung der Antriebsformation 46 deren radiale Vorsprünge in Anlage an in Umfangsrichtung weisende Flanken der Ausnehmung des Gegenabstützbauteils. Aufgrund des Formschlusseingriffs des Eingriffsbereichs der Schraubmoment-Abstützanordnung 82 mit dem Schraubenkopf 78b der Sicherungsschraube 78 wird ein auf der Festlagerseite der Antriebsformation 46 in die Antriebsformation 46 eingeleitetes Antriebsdrehmoment durch Formschlussanlage zwischen den Vorsprüngen und dem Gegenabstützbauteil auf der Loslagerseite der Antriebsformation 46 abgestützt. Somit ist sichergestellt, dass es bei fortgesetztem Drehantrieb der Antriebsformation 46 zu einer Relativdrehung zwischen der Sicherungsschraube 78 und der Antriebsformation 46 und damit zu einer Schraubbewegung der Sicherungsschraube 78 relativ zur Antriebsformation 46, im dargestellten Beispiel: relativ zum Zentrierzapfen 60a, kommt. Die Sicherungsschraube 78 kann somit durch die abstützende Wirkung der Schraubmoment-Abstützanordnung 82 im Zusammenwirken mit dem Gegenabstützbauteil mit extrem hohem Drehmoment angezogen bzw. gelöst werden.

Die Herstellung bzw. das Lösen der axialen Positionssicherung der Fräswalze 32 relativ zur Antriebsformation 46 kann mit Ausnahme der Schraubmoment-Abstützanordnung 82 werkzeugfrei erfolgen.

Nachfolgend wird die in den Figuren 2 und 3 bereits erläuterte erste Ausführungsform hinsichtlich ihres Betriebs zur Demontage und Montage der Fräswalze 32 von der Antriebsformation 46 bzw. auf diese durch den Aktuator 65 erläutert.

In der Ausführungsvariante der Figuren 4 bis 6 ist die Kupplungsformation 68' unmittelbar am Deckel 60 ausgebildet. Die Energie-Anschlussleitung 64 durchsetzt die Kupplungsformation 68', um den Hydraulikzylinder 62 mit Hydraulikfluid versorgen zu können.

Die Anschlussstelle der Energie-Anschlussleitung 64 am Hydraulikzylinder 62 ist lediglich beispielhaft gewählt. Es sei klargestellt, dass alle in den Figuren dargestellten Hydraulikzylinder doppeltwirkende Zylinder sind. Jede von zwei in entgegengesetzte Richtungen wirkenden Hydraulikkammern eines dargestellten Hydraulikzylinders ist mit je einer Energie-Anschlussleitung 64 gekoppelt. Der Übersichtlichkeit halber, und weil es für das grundsätzliche Verständnis von der Ausführungsform ausreichend ist, ist in vielen Darstellungen nur eine von zwei Energie-Anschlussleitungen 64, 64' gezeigt. Eine Energie-Anschlussleitung 64 führt dabei zu der die Kolbenstange 63 ausschiebenden Kammer, eine Energie-Anschlussleitung 64' zu der die Kolbenstange 63 einfahrenden Kammer.

Bei einer alternativen Ausführungsform kann auch nur eine einzige Hydraulikleitung vorhanden sein und die Rückstellung des Hydraulikzylinders beispielsweise über eine Federspannung erfolgen.

In ein Innengewinde 74e an dem vom Aktuator 65 fern liegenden Längsende des Lagerzapfens 74a ist in Figur 4 ein Gegenlösebauteil 90 eingeschraubt.

Das Gegenlösebauteil 90 weist hierzu einen Gewindeabschnitt 90a mit einem Außengewinde auf, welches sich in Figur 4 in Schraubeingriff mit dem Innengewinde 74e am Lagerzapfen 74a befindet.

Das Gegenlösebauteil 90 weist zu seinem Einschrauben in den starr mit dem Fräswalzenrohr 42 verbundenen Lagerzapfen 74a eine Werkzeugangriffsformation 90b auf, im dargestellten Beispiel einen Außen-Sechskant-Polyeder.

An seinem in dem in Figur 4 gezeigten, in den Lagerzapfen 74a eingeschraubten Betriebszustand weist das Gegenlösebauteil 90 an seinem der Antriebsformation 46 zugewandten Längsende 92 eine Gegenlöseformation 92a in Gestalt einer ebenen Anlagefläche auf. Eine ebenfalls ebene Anlagefläche am freien Längsende der Kolbenstange 63 bildet eine Löseformation 63a des Aktuators 65, welche durch Ausfahren der in Figur 4 im eingezogenen Zustand gezeigten Kolbenstange 63 in Anlageeingriff (Lösekraftübertragungseingriff) mit der Gegenlöseformation 92a gebracht werden kann. Durch Ausübung von Druckkraft mittels der Kolbenstange 63 auf das Gegenlösebauteil 90 durch den dann hergestellten Lösekraftübertragungseingriff kann die Fräswalze 32 aus der in Figur 4 gezeigten Betriebsposition in Figur 4 axial nach rechts verschoben werden.

An ihrem freien Längsende weist die Kolbenstange 63 außerdem ein Außengewinde 63b auf, mit welchem die Kolbenstange 63 mit einem Innengewinde 90c des Gegenlösebauteils 90 in Schraubeingriff bringbbar ist. Das Innengewinde 90c ist von dem die Gegenlöseformation 92a tragenden Längsende 92 entgegengesetzten Längsende 94 des Gegenlösebauteils 90 zugänglich und erstreckt sich axial in das Gegenlösebauteil 90 hinein. Die das Innengewinde 90c am Längsende 94 umgebende Anlagefläche des Gegenlösebauteils 90 bildet eine Kopplungsstruktur 94a, mit welcher dann, wenn das Gegenlösebauteil 90 auf das Außengewinde 63b der Kolbenstange 63 aufgeschraubt ist, die Fräswalze 32 von einer Vorbereitungsposition in Richtung der Betriebsposition hin, vorzugsweise in die Betriebsposition bewegt werden kann.

In Figur 5 ist ein Zustand der Arbeitsbaugruppe 28 von Figur 4 gezeigt, bei welchem ein Lösekraftübertragungseingriff zwischen der Löseformation 63a der Kolbenstange 63 und der Gegenlöseformation 92a des Gegenlösebauteils 90 hergestellt ist. Mittels des hergestellten Lösekraftübertragungseingriffs wurde die Fräswalze 32 durch die Kraft des Aktuators 65 aus der Betriebsposition in eine axial von dieser entfernt gelegene Position verschoben, die auch die Vorbereitungsposition für eine erneute Verlagerung der Fräswalze 32 in Richtung der Betriebsposition sein kann.

Um den Aktuator 65 betreiben zu können, wurde an die Energie-Anschlussleitung 64, genauer an deren Kupplungsformation 68', eine Hydraulik-Versorgungsleitung 69 der Maschine 10 angeschlossen, welche durch eine entsprechende Durchgangsöffnung 74f am Verbindungsflansch 74 hindurch zugänglich ist.

Die Durchgangsöffnung 74f am Verbindungsflansch 74 kann identisch wie die Ausnehmung 74c ausgebildet sein. Der Verbindungsflansch 74 kann somit eine höhere Anzahl an Öffnungen 74c aufweisen als am Deckel 60 Zapfen 80 vorgesehen sind. In diesem Falle kann bequem eine Öffnung 74c, die nicht durch einen Zapfen 80 für einen drehmomentübertragenden Formschlusseingriff benötigt wird, als Durchgangsöffnung 74f zum Anschluss der Versorgungsleitung 69 an die Kupplungsformation 68' genutzt werden.

In Figur 6 ist die Ausführungsform beispielhaft für ein automatisiertes Verlagern der Fräswalze 32 von einer in Figur 6 gezeigten Vorbereitungsposition in die Betriebsposition durch den Aktuator 65 gezeigt.

Eine zusätzlich zu der zuvor zum Ausschieben der Kolbenstange 63 gezeigten Energie-Anschlussleitung 64 vorhandene weitere, für ein Einfahren der Kolbenstange 63 vorgesehene Energie-Anschlussleitung 64' ist ebenfalls über eine Kupplungsformation 68' mit der Versorgungsleitung 69 kuppelbar, um die Kolbenstange 63 aus der in Figur 6 gezeigten ausgefahrenen Stellung wieder in eine weiter in den Hydraulikzylinder 62 eingefahrene Stellung zu bewegen. Die Kopplungsstruktur 94a ist mit der Kolbenstange 63 fest verbunden, indem das Gegenlösebauteil 90 mit dem Innengewinde 90c auf das Außengewinde 63b der Kolbenstange aufgeschraubt wurde. Wird die Kolbenstange 63 mit der daran angeordneten Kopplungsstruktur 94a in Figur 6 nach links bewegt und in den Hydraulikzylinder 62 eingezogen, kommt die Kopplungsstruktur 94a in einen als Anlageeingriff ausgestalteten Montagekraftübertragungseingriff mit der Kopplungsgegenstruktur 74g in Gestalt der vorzugsweise ebenen, von der Antriebsformation 46 weg weisenden Stirnfläche des Lagerzapfens 74a am Verbindungsflansch 74.

Beim Einziehen der Kolbenstange ausgehend von der in Figur 6 gezeigten Situation kann die Fräswalze 32 in ihrer Vorbereitungsposition in an sich bekannter, jedoch in Figur 6 nicht näher dargestellter Weise axial beweglich auf einem Untergrund abgestützt sein oder lediglich bis über ihren Schwerpunkt hinaus auf die Antriebsformation 46 axial aufgeschoben sein.

Nach Abschluss der Verlagerung der Fräswalze 32 in die Betriebsposition durch den Aktuator 65 kann die Kolbenstange 63 zunächst ein Stück weit wieder in Ausfahrrichtung, das heißt in Figur 6 nach rechts, bewegt werden, um ein Abschrauben des Gegenlösebauteils 90 von der Kolbenstange 63 ohne erhöhten Kraftaufwand durch den ohne Ausfahrbewegung möglicherweise noch wenigstens teilweise bestehenden Montagekraftübertragungseingriff zu ermöglichen. Nach Abnahme des Gegenlösebauteils 90 von der Kolbenstange 63 und Verstauung desselben an der Bearbeitungsmaschine 10 kann die Kolbenstange 63 in den Hydraulikzylinder 62 eingefahren werden und die Fräswalze 32 kann, wie in Figur 3 dargestellt, durch die Sicherungsschraube 78 in ihrer Betriebsposition gegen axiale Verlagerung von der Antriebsformation 46 gesichert werden.

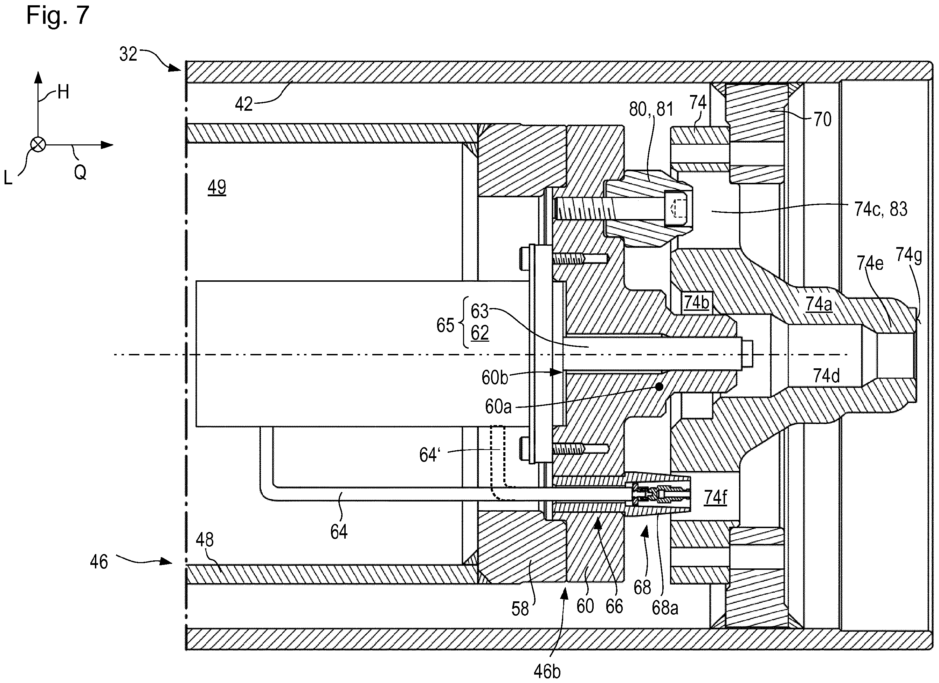

In Figur 7 ist eine weitere Antriebsformation 46 mit daran in Vorbereitungsposition angeordneter Fräswalze 32 gezeigt. Der wesentliche Unterschied zwischen den Varianten der Figuren 4 bis 6 und der Figur 7 liegt lediglich in der Ausgestaltung der Kupplungsformation 68, welche jener von Figur 2 entspricht.

Die Energie-Anschlussleitung 64 bzw. 64' kann mitsamt der Hülse 68a axial in Richtung von der Antriebsformation 46 weg, das ist in Figur 7 nach rechts, herausgezogen werden, um ihre Verbindung mit einer Versorgungsleitung 69 zu erleichtern. Die Energie-Anschlussleitung 64 bzw. 64' kann gegen eine Federvorspannung aus ihrer in Figur 7 gezeigten Ruheposition in der Hülse 68a der Kupplungsformation 68 herausgezogen werden, sodass sie sich bei Wegfall einer äußeren Krafteinwirkung selbstständig in die in Figur 7 gezeigte Ruheposition zurückbewegt, wo sie radial außen durch die Hülse 68a umgeben ist.

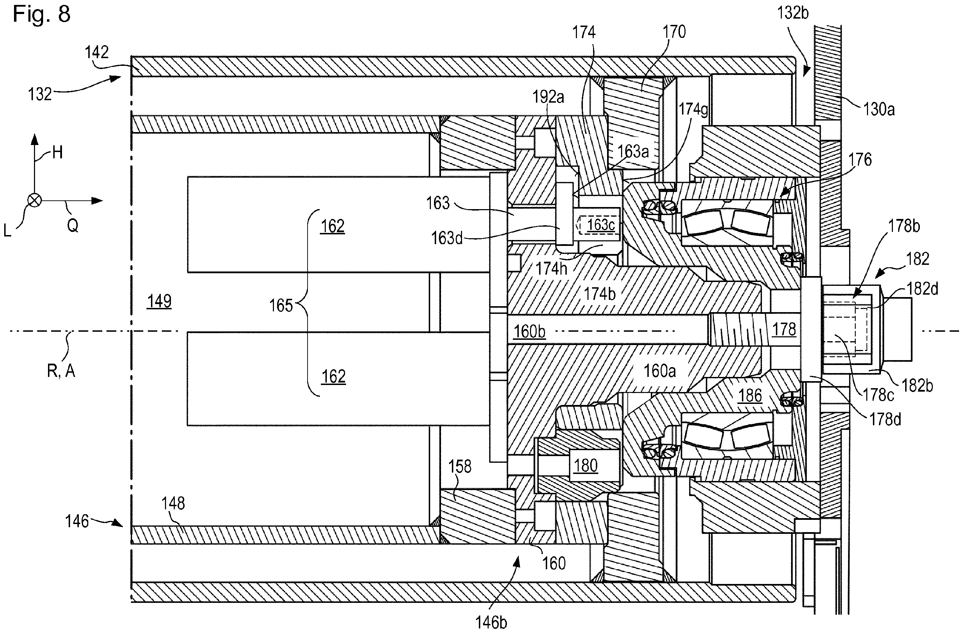

In Figur 8 ist eine zweite Ausführungsform der Antriebsformation und der Fräswalze (Arbeitsvorrichtung) gezeigt.

Gleiche und funktionsgleiche Bauteile und Bauteilabschnitte wie in der ersten Ausführungsform sind in der zweiten Ausführungsform mit gleichen Bezugszeichen versehen, jedoch erhöht um die Zahl 100. Die zweite Ausführungsform von Figur 8 wird nachfolgend nur insofern erläutert, als sie sich in einem für die Erfindung wesentlichen Umfang von der ersten Ausführungsform unterscheidet.

Eine erste wesentliche Änderung der zweiten Ausführungsform gegenüber der bisher beschriebenen ersten Ausführungsform ist die Gestalt des Zentrierzapfens 160a, welcher sowohl bezüglich des Verbindungsflansches 174 der Fräswalze 132 als Zentrierformation wirkt, als auch bezüglich des Loslagers 176 als Lagerzapfen dient.

Die Gegenzentrierformation 174b ist somit wiederum als Ausnehmung ausgebildet. Im Gegensatz zur ersten Ausführungsform ragt der Zentrierzapfen 160a im zweiten Ausführungsbeispiel nicht nur axial in den Verbindungsflansch 174 ein, sondern durchsetzt diesen axial vollständig.

Hierdurch kann die Sicherungsschraube 178 konstruktionsbedingt den Verbindungsflansch 174 nicht mehr unmittelbar mit Axialkraft beaufschlagen und in die Betriebsposition verlagern bzw. die Fräswalze 132 über den Verbindungsflansch 174 axial in der Betriebsposition sichern. Eine Axialkraftübertragung zwischen der Sicherungsschraube 178 und dem starr mit der Fräswalze 132 verbundenen Verbindungsflansch 174 erfolgt in der zweiten Ausführungsform unter Zwischenanordnung eines Hilfsbauteils 186 zwischen dem Schraubenkopf 178b und dem Verbindungsflansch 174. Das Hilfsbauteil 186 ist dabei in vorteilhafter Weise Teil des Loslagers 176 und dient dabei als Abstützbauteil für den Innenring des Wälzlagers des Loslagers 176. Das Hilfsbauteil 186 stützt sich einmal am Schraubenkopf 178b und ein weiteres Mal am Verbindungsflansch 174 ab.

In der zweiten Ausführungsform ist außerdem kein zentraler Hydraulikzylinder vorgesehen, sondern es sind mehrere, etwa drei Hydraulikzylinder 162 (davon sind der Übersichtlichkeit halber nur zwei in Figur 8 vollständig dargestellt, die Lage des dritten Hydraulikzylinders ist lediglich angedeutet) mit, vorzugsweise gleichem, radialem Abstand von der Antriebsachse A in Umfangsrichtung um die Antriebsachse A herum verteilt angeordnet. Da jeder der Hydraulikzylinder 162 nur noch ein Drittel der ursprünglich vom zentralen Hydraulikzylinder 162 alleine aufzubringenden Kraft liefern muss, kann jeder der Hydraulikzylinder 162 in vorteilhafter Weise kleiner ausfallen als der zentrale Hydraulikzylinder 162 der ersten Ausführungsform.

Jeder Hydraulikzylinder 162 bildet zusammen mit seiner jeweiligen Kolbenstange 163 einen Teil-Aktuator, wie er in der Beschreibungseinleitung erwähnt ist. Alle Teil-Aktuatoren bilden zusammen wiederum den Aktuator 165.

Mit den Hydraulikzylindern 162 kann wiederum die Fräswalze 132 axial in Richtung zur Betriebsposition hin, bevorzugt in die Betriebsposition bewegt werden. Ebenso kann die Fräswalze 132 axial hydraulisch aus der Betriebsposition heraus bewegt werden.

Die Kolbenstangen 163 der im Wesentlichen identisch ausgebildeten Teil-Aktuatoren 162/163 weisen, bevorzugt integral mit der Kolbenstange 163 ausgebildet, einen Radialvorsprung 163d auf, an dessen von der Antriebsformation 146 weg weisenden Seite die Löseformation 163a als Anlagefläche ausgebildet ist.

Ebenso ist die Gegenlöseformation 192a als in axiale Richtung auf die Antriebsformation 146 zu weisende Anlagefläche in einem Absatz einer Aktuator-Durchgangsöffnung 174h im Verbindungsflansch 174 ausgebildet.

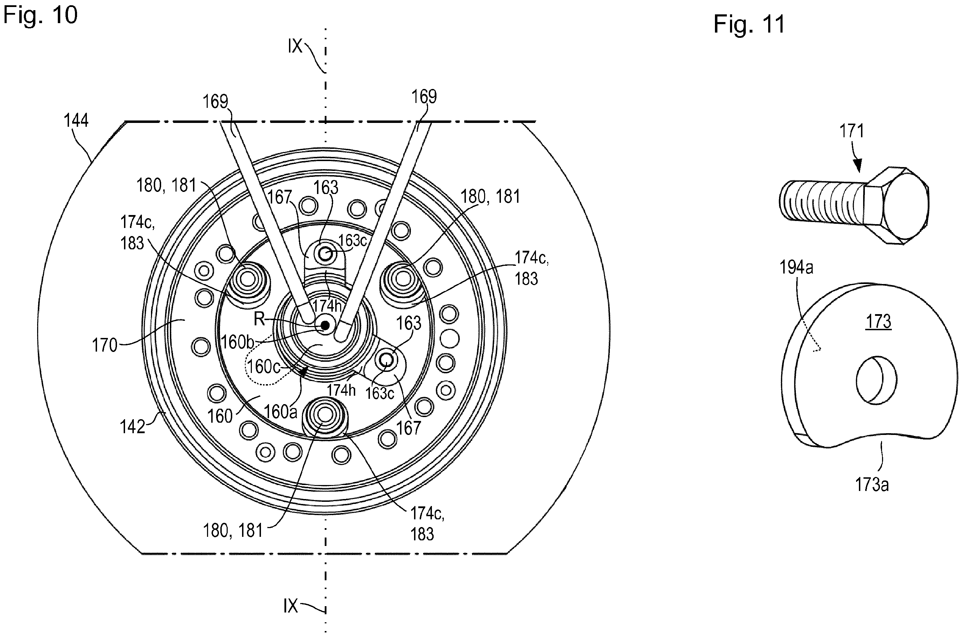

Die Kolbenstange 163 weist an ihrem vom Hydraulikzylinder 162 fern liegenden Längsende ein in axialer Richtung in die Kolbenstange 163 hinein verlaufendes Innengewinde 163c auf, mit welcher eine Kopplungsstruktur 194 verbindbar ist. Eine zur Verbindung mit den Kolbenstangen 163 der zweiten Ausführungsform geeignete Kopplungsstruktur 194 ist in Figur 11 dargestellt. In Figur 11 ist eine Schraube 171 gezeigt, welche in das Innengewinde 163c am freien Längsende der Kolbenstange 163 eindrehbar ist. Dabei kann der Schaft der Schraube 171 eine Unterlegscheibe 173 durchsetzen, welche so zwischen dem Schraubenkopf der Schraube 171 und der Kolbenstange 163 angeordnet wird.

Eine im montierten Zustand der die Aktuator-Durchgangsöffnung 174h wenigstens abschnittsweise umgebenden Kopplungsgegenstruktur 174g in Gestalt einer ebenen Fläche gegenüberliegende Stirnseite der Unterlegscheibe 173 bildet die Kopplungsstruktur 192a. Diese Kopplungsstruktur 192a kann durch Einziehen der Kolbenstange 163 aus einer weiter ausgefahrenen Position in Montagekraftübertragungseingriff (Anlageeingriff) mit der Kopplungsgegenstruktur 174g gebracht werden, wodurch bei Fortsetzen der Einfahrbewegung der Kolbenstange 163 in den Hydraulikzylinder 162 der Verbindungsflansch 174 und mit diesem die Fräswalze 132 axial mitgenommen werden, bis die Fräswalze 132 ihre Betriebsposition erreicht.

Die Innengewinde 163c der Kolbenstangen 163 sind von außerhalb des Maschinenkörpers 13 zugänglich, nachdem das Loslager 176 bestimmungsgemäß von dem Zapfen 160a des Deckels 160 entfernt wurde.

Wie in Figur 11 gezeigt ist, ist die Unterlegscheibe 173 mit einer Ausnehmung 173a ausgebildet, in die im Anbringungszustand der Unterlegscheibe 173 der Zapfen 160a wenigstens teilweise radial einragt.

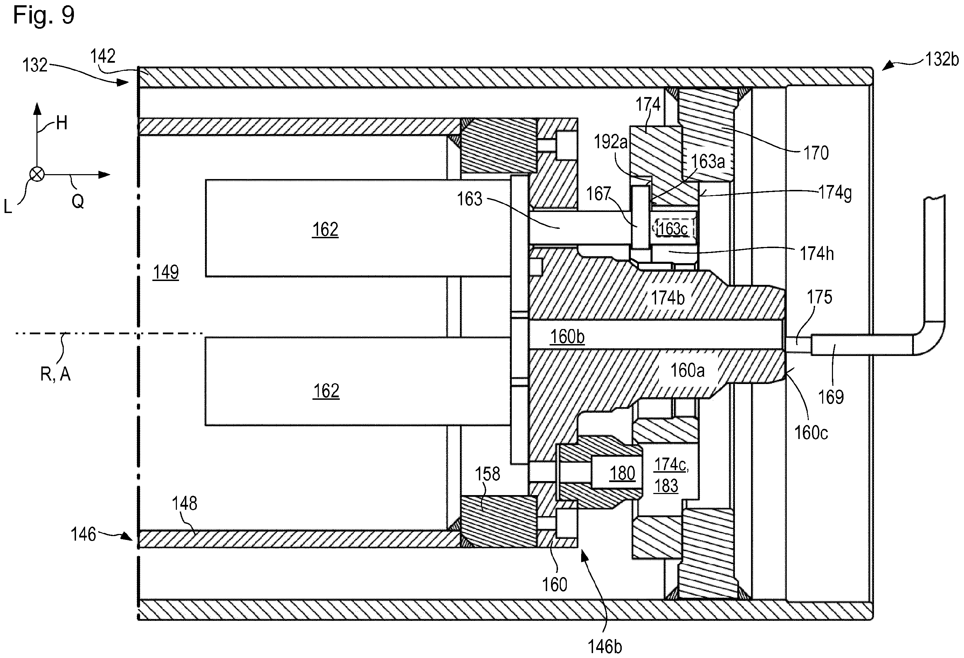

In Figur 9 ist die Ausführungsform von Figur 8 mit der Fräswalze 132 in einer Vorbereitungsposition gezeigt. Durch Ausschieben der Kolbenstange 163 aus dem Hydraulikzylinder 162 befinden sich die Löseformation 163a und die Gegenlöseformation 192a in Anlage aneinander und somit in Lösekraftübertragungseingriff miteinander. Durch Fortsetzung der Ausfahrbewegung der Kolbenstange 163 ausgehend von der Position in Figur 8 wurde die Fräswalze 132 relativ zur Antriebsformation 146 in die in Figur 9 gezeigte Position axial verschoben.

Im Gegensatz zu den zuvor gezeigten Ausführungsformen verläuft die Energie-Anschlussleitung durch den Zapfen 160a des Deckels 160, in dessen Stirnfläche 160c eine Versorgungsleitung 169 mit einer Gegenkupplungsformation 175 an eine vorbereitete Kupplungsformation (nicht dargestellt) im Zapfen 160a des Deckels 160 anschließbar ist.

Der Vorteil der Ausbildung der in Figur 9 nur durch die Gegenkupplungsformation 175 mittelbar erkennbaren Kupplungsformation am auskragenden Längsende des Zapfens 160a des Deckels 160 liegt in der stets vorhandenen Zugänglichkeit der Kupplungsformation. Denn der Zapfen 160a des Deckels 160 dient auch zur Abstützung des Loslagers. Die Stirnfläche 160c ist somit stets von außen zugänglich.

In Figur 10 ist eine stirnseitige Ansicht der Ausführungsform der Figuren 8 und 9 mit zwei angeschlossenen Versorgungsleitungen 169 dargestellt. Jede von zwei in entgegengesetzte Richtung wirkenden Hydraulikkammern der Hydraulikzylinder 162 ist mit je einer Versorgungsleitung 169 verbunden. Eine Versorgungsleitung 169 ist daher die die Kolbenstangen 163 ausschiebende Versorgungsleitung, die andere ist die einfahrende. Die in Figur 10 linke Versorgungsleitung 169 liegt vor der Schnittebene IX-IX von Figur 10, sodass diese Leitung vor der Zeichenebene von Figur 9 gelegen ist.

Die Hydraulik-Versorgungsleitungen 169 verzweigen sich jeweils in der Antriebsformation 146 zu den jeweiligen Zylindern hin, sodass jede Versorgungsleitung 169 je eine gleichwirkende Kammer der drei doppeltwirkenden Hydraulikzylinder 162 mit Hydraulikfluid versorgen kann.

Bei der Verwendung von doppeltwirkenden Zylindern in der Antriebsformation ist es jedoch vorteilhaft, in der Antriebsformation eine Ausgleichsstruktur bereitzustellen, welche durch Erwärmung und Abkühlung bedingte Druckunterschiede in dem Rest-Hydraulikfluid ausgleicht, das bei einem doppeltwirkenden Zylinder stets in beiden Druckkammern verbleibt.

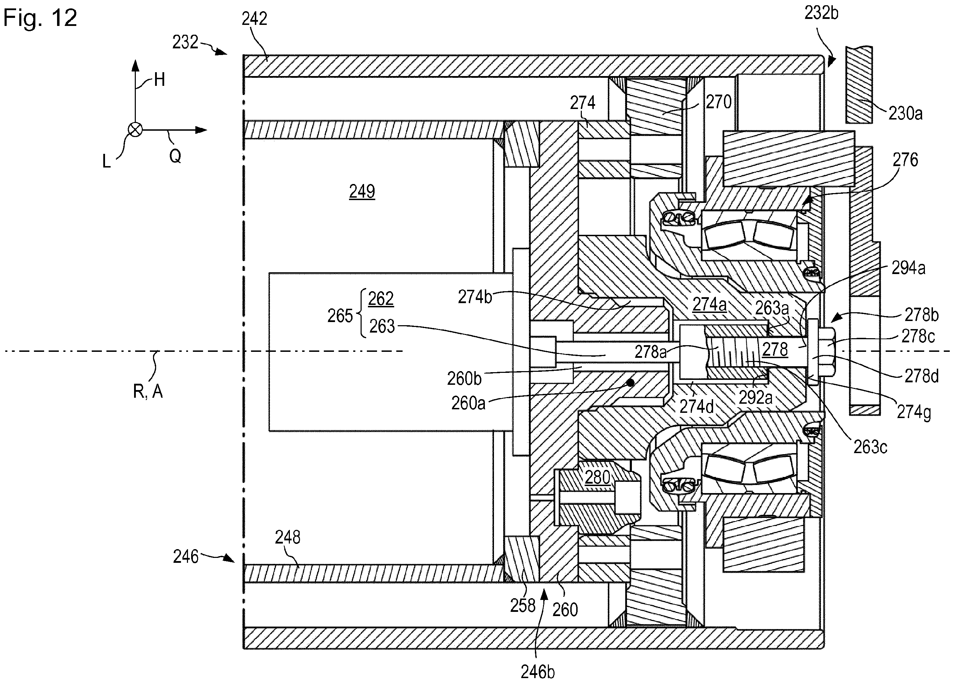

In Figur 12 ist abschließend eine dritte Ausführungsform gezeigt, die darstellen soll, dass die zentrale Sicherungsschraube 278 auch mit der Kolbenstange 263 des Hydraulikzylinders 262 zur axialen Positionssicherung der Fräswalze 32 an der Antriebsformation 46 verschraubt sein kann.

Gleiche und funktionsgleiche Bauteile und Bauteilabschnitte wie in der ersten Ausführungsform sind in der dritten Ausführungsform mit gleichen Bezugszeichen versehen, jedoch erhöht um die Zahl 200. Die dritte Ausführungsform von Figur 12 wird vorliegend nur insofern erläutert, als sie sich in einem für die Erfindung wesentlichen Umfang von der ersten Ausführungsform unterscheidet.

Die in Figur 12 dargestellte dritte Ausführungsform mit in die Kolbenstange 263 eingedrehter Sicherungsschraube 278 ist selbstverständlich auch auf die Konstruktion der zweiten Ausführungsform anwendbar, bei welcher der Zentrierzapfen und der Lagerzapfen in einem einzigen Bauteil realisiert sind. Dann ist lediglich notwendig, dass sich der Schraubenkopf 278b an einem Kraft vom Schraubenkopf 278b auf einen starr mit der Fräswalze 232 verbundenen Bauteilabschnitt übertragenden Hilfsbauteil abstützt, wie dies in Figur 7 mit dem Hilfsbauteil 186 der Fall ist. Bevorzugt wird wiederum ein ohnehin vorhandenes Bauteil, beispielsweise ein Teil des Loslagers 276, als Hilfsbauteil verwendet.

Die Lösung der dritten Ausführungsform gemäß Figur 12 hat den Vorteil, dass die Fräswalze 232 mit dem Hydraulikzylinder 262 axial auf die Antriebsformation aufgezogen und in die Betriebsposition verbracht werden kann und ebenso axial von der Antriebsformation 246 abgezogen und aus der Betriebsposition entfernt werden kann. Die für die axiale Bewegung der Fräswalze 232 notwendigen Axialkräfte werden vom Hydraulikzylinder 262 bereitgestellt, und zwar sowohl für die Montage als auch für die Demontage der Fräswalze 232. Die axiale Positionssicherung mit dem oben genannten sehr hohen Drehmoment erfolgt dann wiederum, wie im Zusammenhang mit Figur 3 beschrieben, durch die Schraubmoment-Abstützanordnung 82, 182, welche mit dem erläuterten Gegenabstützbauteil auf der Loslagerseite der Antriebsformation 26 (Nullseite der Bodenbearbeitungsmaschine 10) zusammenwirkt und mit einer Drehmomenteinleitung auf der Festlagerseite der Antriebsformation 246 (der Nullseite in Maschinenquerrichtung Q entgegengesetzte Antriebsseite der Bodenbearbeitungsmaschine 10) durch entweder die Brennkraftmaschine 39 oder einen gesonderten Drehantrieb, welcher - wie oben bereits beschrieben wurde - mit einer Kopplungsformation 57 (siehe Figur 2) der Antriebsformation 246 vorübergehend zur Drehmomentübertragung koppelbar sein kann.

Somit bildet die zum Gewindeschaft 278a hinweisende Seite des Radialvorsprungs 278d des Schraubenkopfes 278b der Sicherungsschraube 278 eine Kopplungsstruktur 294a.

Die Sicherungsschraube 278 ist in das Innengewinde 263c einschraubbar, welches sich ausgehend von dem freien Längsende der Kolbenstange 263 axial in diese hinein erstreckt. Eine das Innengewinde 263c und deren Ausnehmung umgebende stirnseitige Fläche der Kolbenstange 263 bildet eine Löseformation 263a, welche mit der Gegenlöseformation 292a des Zapfens 274a des Verbindungsflansches 274 in Anlageeingriff (Lösekraftübertragungseingriff) bringbar ist. Die Gegenlöseformation 292a ist gebildet durch die in der Betriebsposition der Fräswalze 232 zur Antriebsformation 246 hinweisende Ringfläche um die vom Gewindeschaft 278a durchsetzte Durchgangsöffnung an dem von der Antriebsformation 246 fern liegenden Längsende des Zapfens 274a. Am Längsende des Zapfens 274a ist der Öffnungsdurchmesser der Durchgangsöffnung 274d verkleinert, sodass der Zapfen 274a an dieser Stelle einen nach radial innen vorkragenden ringförmigen Radialvorsprung bildet. Dieser Radialvorsprung bildet auf der zur Antriebsformation 246 hinweisenden Seite die Gegenlöseformation 292a und bildet auf der entgegengesetzten Seite die Kopplungsgegenstruktur 274g.

Der Hydraulikzylinder 262 muss dann, wenn die Sicherungsschraube 278 die einzige Positionssicherung ist, dauerhaft mit Hydraulikdruck in Einfahrrichtung beaufschlagt werden. Dazu kann in der Antriebsformation ein Zwischenspeicher vorgesehen sein, welcher die für das Einfahren der Kolbenstange 263 vorgesehene Kammer dauerhaft mit Druck beaufschlagt. Dieser Zwischenspeicher kann ähnlich wie der Ausgleichsspeicher 67 von Fig. 2 an den Hydraulikzylinder 262 angeschlossen sein, jedoch wird der Zwischenspeicher für die Ausführungsform von Figur 12 wegen seiner abweichenden Aufgabenstellung vom Ausgleichsspeicher 67 abweichende Abmessungen und Betriebsparameter aufweisen. Der Druck im Zwischenspeicher kann durch die Drehung der Fräswalze 232 aufgebaut bzw. aufrecht erhalten werden.

Abweichend von der Darstellung in Figur 12 kann die Kolbenstange 263 über ihre gesamte Länge eine konstante Dicke bzw. einen konstanten Durchmesser aufweisen, welcher dann durch den Durchmesser des zum Eindrehen der Sicherungsschraube 278 bestimmten Längsendes der in Figur 12 gezeigten Kolbenstange 163 bestimmt ist.

Alternativ kann die Fräswalze 232 in ihrer Betriebsposition durch eine oder bevorzugt mehrere dezentrale Sicherungsschauben an der Antriebsformation 246 gesichert sein, um den Hydraulikzylinder 262 während der Betriebsphasen der Fräswalze 232 zu entlasten.

## Patentansprüche

1. Bodenbearbeitungsmaschine (10), wie Straßenfräse, Recycler, Stabilisierer oder Surface-Miner, umfassend einen Maschinenkörper (13) mit einem Maschinenrahmen (12) und einer relativ zum Maschinenrahmen (12) um eine Antriebsachse (A), welche eine axiale Richtung definiert, zur Drehung antreibbaren Antriebsformation (46; 146; 246), welche sich längs der Antriebsdrehachse (A) von einem Einleitungslängsende (46a), an dem die Antriebsformation (46; 146; 246) zur Einleitung eines Antriebsdrehmoments ausgebildet ist, zu einem dem Einleitungslängsende (46a) axial entgegengesetzten Funktionslängsende (46b, 146b, 246b) erstreckt und mit welcher eine für eine Bodenbearbeitung ausgebildete Arbeitsvorrichtung (32; 132; 232) in einer für eine Bodenbearbeitung betriebsbereiten Betriebsposition Drehmoment übertragend zur gemeinsamen Drehung um die Antriebsachse (A) lösbar verbunden ist, wobei die Arbeitsvorrichtung (32; 132; 232) bei gelöster Verbindung zur Demontage von der Antriebsformation (46; 146; 246) relativ zur Antriebsformation (46; 146; 246) in axialer Richtung aus der Betriebsposition entfernbar und zur Montage an die Antriebsformation (46; 146; 246) relativ zur Antriebsformation (46; 146; 246) in axialer Richtung in die Betriebsposition bringbar ist, wobei ein Aktuator (65; 165; 265) vorgesehen ist, welcher dazu ausgebildet ist, die Arbeitsvorrichtung (32; 132; 232) bei gelöster Verbindung aus der Betriebsposition zu bewegen,
**dadurch gekennzeichnet, dass** der Aktuator (65; 165; 265) ein Aktuatorglied (63; 163; 263) und ein Aktuatorgehäuse (62, 162, 262) umfasst, welches an der Antriebsformation (46; 146; 246) zur gemeinsamen Bewegung mit dieser an einer Position vorgesehen ist, welche näher bei dem Funktionslängsende (46b, 146b, 246b) als bei dem Einleitungslängsende (46a) gelegen ist, wobei das Aktuatorglied (63, 163, 263) des Aktuators (65, 165, 265) relativ zum Aktuatorgehäuse (63, 163, 263) beweglich ist.

2. Bodenbearbeitungsmaschine (10) nach Anspruch 1,
**dadurch gekennzeichnet, dass** die Antriebsformation (46; 146; 246) einen die Antriebsformation (46; 146; 246) am Funktionslängsende (46b, 146b, 246b) abschließenden Deckel (60, 160, 260) umfasst, wobei das Aktuatorgehäuse (62, 162, 262) am Deckel (60, 160, 260) befestigt ist.

3. Bodenbearbeitungsmaschine (10) nach Anspruch 2,
**dadurch gekennzeichnet, dass** das Aktuatorgehäuse (63, 163, 263) auf der dem Einleitungslängsende (46a) zugewandten Seite des Deckels (60, 160, 260) angeordnet ist und der Deckel (60, 160, 260) eine ihn axial durchsetzende Ausnehmung (60b, 160b, 260b) aufweist, welche vom Aktuatorglied (63, 163, 263) vollständig durchsetzbar ist.

4. Bodenbearbeitungsmaschine (10) nach einem der Ansprüche 2 oder 3,
**dadurch gekennzeichnet, dass** die Antriebsformation (46; 146; 246) einen Rohrkörper (48, 148, 248) umfasst, welchen der Deckel (60, 160, 260) am Funktionslängsende (46b, 146b, 246b) der Antriebsformation (46; 146; 246) axial abschließt, wobei sich wenigstens das Aktuatorgehäuse (62, 162, 262) in einem von Deckel und Rohrkörper eingefassten Aufnahmeraum befindet, wobei ein Körperabschnitt, insbesondere Deckel (60), der Antriebsformation (46; 146; 246) von einer Energie-Durchgangsöffnung (66) durchsetzt ist, an welcher oder durch welche hindurch eine Energie-Anschlussleitung (64, 64') zugänglich ist, die zur Übertragung von Antriebsenergie mit dem Aktuator (65; 165; 265) verbunden ist.

5. Bodenbearbeitungsmaschine (10) nach Anspruch 4,
**dadurch gekennzeichnet, dass** die Anschlussleitung (64, 64') an ihrem vom Aktuator (65; 165; 265) fernliegenden Ende eine Kupplungsformation (68, 68') aufweist, welche zur Energie übertragenden Kupplung mit einer Gegenkupplungsformation einer Versorgungsleitung (69; 169) ausgebildet ist.

6. Bodenbearbeitungsmaschine (10) nach einem der vorhergehenden Ansprüche,
**dadurch gekennzeichnet, dass** die Antriebsformation (46; 146; 246) in einem ihrem Funktionslängsende (46b; 146b, 246b) näher als ihrem Einleitungslängsende (46a) gelegenen Bereich, bevorzugt am Funktionslängsende (46b; 146b, 246b), eine Antriebsdrehmoment übertragende Formschluss-Kopplungsanordnung (81, 181) zur Antriebsdrehmoment übertragenden formschlüssigen Kopplung mit einer Gegenkopplungsanordnung (83; 183) der Arbeitsvorrichtung (32; 132; 232) aufweist.

7. Bodenbearbeitungsmaschine (10) nach Anspruch 6, unter Einbeziehung des Anspruchs 4,
**dadurch gekennzeichnet, dass** die Energie-Durchgangsöffnung (66) in der Formschluss-Kopplungsanordnung (81, 181) ausgebildet ist.

8. Bodenbearbeitungsmaschine (10) nach einem der vorhergehenden Ansprüche,
**dadurch gekennzeichnet, dass** die Antriebsformation (46; 146; 246) in einem ihrem Einleitungslängsende (46a) näher als ihrem Funktionslängsende (46b; 146b, 246b) gelegenen Bereich, einen sich vom Funktionslängsende (46b; 146b, 246b) weg aufweitenden Stützkonus (50) aufweist, an welchem die Arbeitsvorrichtung (32) in ihrer Betriebsposition über einen Gegenstützkonus (51) abgestützt ist.

9. Bodenbearbeitungsmaschine (10) nach einem der vorhergehenden Ansprüche,
**dadurch gekennzeichnet, dass** der Aktuator (65; 165; 265) ein fluidmechanischer, insbesondere hydraulischer, oder/und ein elektromechanischer Aktuator ist.

10. Bodenbearbeitungsmaschine (10) nach Anspruch 9,
**dadurch gekennzeichnet, dass** der Aktuator (65; 165; 265) ein einfachwirkender Aktuator, insbesondere eine einfachwirkende Kolben-Zylinder-Anordnung mit federrückgestellter Kolbenstange, oder ein doppeltwirkender Aktuator (65; 165; 265), insbesondere eine doppeltwirkende Kolben-Zylinder-Anordnung (62, 63; 162, 163; 262, 263), ist.

11. Bodenbearbeitungsmaschine (10) nach einem der vorhergehenden Ansprüche,
**dadurch gekennzeichnet, dass** eine Löseformation (63a; 163a; 263a) des Aktuatorglieds (63; 163; 263) durch Bewegung des Aktuatorglieds (63; 163; 263), vorzugsweise durch axiale Bewegung des Aktuatorglieds (63; 163; 263) von einer eingezogenen in Richtung zu einer ausgefahrenen Position hin, mit einer Gegenlöseformation (92a; 192a; 292a) der Arbeitsvorrichtung (32; 132; 232) in Lösekraftübertragungseingriff bringbar ist, wobei bei hergestelltem Lösekraftübertragungseingriff die Arbeitsvorrichtung (32; 132; 232) durch den Aktuator (65; 165; 265) aus der Betriebsposition heraus verlagerbar ist.

12. Bodenbearbeitungsmaschine (10) nach Anspruch 11,
**dadurch gekennzeichnet, dass** die Löseformation (63a; 163a; 263a) fest mit dem Aktuatorglied (63; 163; 263) verbunden, vorzugsweise einstückig an diesem ausgebildet ist.

13. Bodenbearbeitungsmaschine (10) nach Anspruch 11 oder 12,
**dadurch gekennzeichnet, dass** die Löseformation (63a; 163a; 263a) an einem Längsende (63a) des Aktuatorglieds (63; 163; 263) oder/und an einem Radialvorsprung (163d) des Aktuatorglieds (63; 163; 263) ausgebildet ist.

14. Bodenbearbeitungsmaschine (10) nach einem der Ansprüche 11 bis 13,
**dadurch gekennzeichnet, dass** die Gegenlöseformation (92a) an einem Gegenlösebauteil (90) ausgebildet ist, welches abnehmbar mit der Arbeitsvorrichtung (32) verbindbar ist.

15. Bodenbearbeitungsmaschine (10) nach einem der Ansprüche 11 bis 13,
**dadurch gekennzeichnet, dass** die Gegenlöseformation (192a; 292a) an einem starr mit der Arbeitsvorrichtung zur gemeinsamen Bewegung verbundenen Bauteilabschnitt (174; 274) ausgebildet ist.

## Claims

1. An earth working machine (10), such as a road milling machine, recycler, stabilizer, or surface miner, encompassing a machine body (13) having a machine frame (12) and a drive configuration (46; 146; 246), rotationally drivable relative to the machine frame (12) around a drive axis (A) that defines an axial direction, that extends along the drive rotation axis (A) from an introduction longitudinal end (46a) at which the drive configuration (46; 146; 246) is embodied for introduction of a drive torque to a functional longitudinal end (46b; 146b; 246b) located axially oppositely from the introduction longitudinal end (46a), and to which configuration a working apparatus (32; 132; 232) embodied for earth working is releasably connected in torque-transferring fashion, in an operating position operational for earth working, for rotation together around the drive axis (A), such that when the connection is released, the working apparatus (32; 132; 232) is removable from the operating position in an axial direction relative to the drive configuration (46; 146; 246) for deinstallation from the drive configuration (46; 146; 246) and, for installation on the drive configuration (46; 146; 246), is conveyable into the operating position in an axial direction relative to the drive configuration (46; 146; 246), an actuator (65; 165; 265) being provided which is embodied to move the working apparatus (32; 132; 232) out of the operating position when the connection is released,
**characterized in that** the actuator (65; 165; 265) comprises an actuator member (63, 163, 263) and an actuator housing (62, 162, 262) which is provided on the drive configuration (46; 146; 246) for movement together therewith, at a position that is located closer to the functional longitudinal end (46b; 146b; 246b) than to the introduction longitudinal end (46a), the actuator member (63, 163, 263) of the actuator (65, 165, 265) being movable relative to the actuator housing (63, 163, 263).

2. The earth working machine (10) according to Claim 1,
**characterized in that** the drive configuration (46; 146; 246) encompasses a cover (60, 160, 260) closing off the drive configuration (46; 146; 246) at the functional longitudinal end (46b, 146b, 246b), the actuator housing (62, 162, 262) being fastened to the cover (60, 160, 260).

3. The earth working machine (10) according to Claim 2,
**characterized in that** the actuator housing (63, 163, 263) is arranged on that side of the cover (60, 160, 260) which faces toward the introduction longitudinal end (46a), and the cover (60, 160, 260) comprises a recess (60b, 160b, 260b), passing axially through it, through which the actuator member (63, 163, 263) can pass completely.

4. The earth working machine (10) according to one of Claims 2 or 3,
**characterized in that** the drive configuration (46; 146; 246) encompasses a tubular body (48, 148, 248) that the cover (60, 160, 260) axially closes off at the functional longitudinal end (46b, 146b, 246b) of the drive configuration (46; 146; 246), at least the actuator housing (62, 162, 262) being located in a receiving space enclosed by the cover and tubular body, a body portion, in particular the cover (60), of the drive configuration (46; 146; 246) being penetrated by an energy passthrough opening (66) at which or through which an energy connector line (64, 64'), which is connected to the actuator (65; 165; 265) for the transfer of drive energy, is accessible.

5. The earth working machine (10) according to Claim 4,
**characterized in that** the connector line (64, 64') comprises, at its end located remotely from the actuator (65; 165; 265), a coupling configuration (68, 68') that is embodied for energy-transferring coupling to a counterpart coupling configuration of a supply line (69; 169).

6. The earth working machine (10) according to one of the preceding claims,
**characterized in that** the drive configuration (46; 146; 246) comprises, in a region located closer to its functional longitudinal end (46b, 146b, 246b) than to its introduction longitudinal end (46a), preferably at the functional longitudinal end (46b; 146b; 246b), a drive torque-transferring positively engaging coupling arrangement (81, 181) for drive torque-transferring positively engaging coupling to a counterpart coupling arrangement (83; 183) of the working apparatus (32; 132; 232).

7. The earth working machine (10) according to Claim 6, including Claim 4,
**characterized in that** the energy passthrough opening (66) is embodied in the positively engaging coupling arrangement (81, 181).

8. The earth working machine (10) according to one of the preceding claims,
**characterized in that** the drive configuration (46; 146; 246) comprises, in a region located closer to its introduction longitudinal end (46a) than to its functional longitudinal end (46b; 146b; 246b), a support cone (50) which widens away from the functional longitudinal end (46b; 146b; 246b) and on which the working apparatus (32) is braced, in its operating position, via a counterpart support cone (51).

9. The earth working machine (10) according to one of the preceding claims,
**characterized in that** the actuator (65; 165; 265) is a fluid-mechanical, in particular hydraulic, and/or electromechanical actuator.

10. The earth working machine (10) according to Claim 9,
**characterized in that** the actuator (65; 165; 265) is a single-acting actuator, in particular a single-acting piston/cylinder arrangement having a spring-returned piston rod, or a double-acting actuator (65; 165; 265), in particular a double-acting piston/cylinder arrangement (62, 63; 162, 163; 262, 263).

11. The earth working machine (10) according to one of the preceding claims,
**characterized in that** a release configuration (63a; 163a; 263a) of the actuator member (63; 163; 263) is conveyable, by movement of the actuator member (63; 163; 263), preferably axial movement of the actuator member (63; 163; 263), from a retracted position toward an extended position, into release force-transferring engagement with a counterpart release configuration (92a; 192a; 292a) of the working apparatus (32; 132; 232), the working apparatus (32; 132; 232) being displaceable by the actuator (65; 165; 265) out of the operating position upon establishment of the release force-transferring engagement.

12. The earth working machine (10) according to Claim 11,
**characterized in that** the release configuration (63a; 163a; 263a) is connected fixedly to the actuator member (63; 163; 263), preferably embodied in one piece on it.

13. The earth working machine (10) according to Claim 11 or 12,
**characterized in that** the release configuration (63a; 163a; 263a) is embodied at a longitudinal end (63a) of the actuator member (63; 163; 263) and/or on a radial projection (163d) of the actuator member (63; 163; 263).

14. The earth working machine (10) according to one of Claims 11 to 13,
**characterized in that** the counterpart release configuration (92a) is embodied on a counterpart release component (90) that is removably connectable to the working apparatus (32).

15. The earth working machine (10) according to one of Claims 11 to 13,
**characterized in that** the counterpart release configuration (192a; 292a) is embodied on a component portion (174; 274) rigidly connected to the working apparatus for movement together.

## Revendications

1. Machine de traitement du sol (10), telle qu'une fraiseuse routière, un recycleur, un stabilisateur ou un Surface Miner, comprenant un corps de machine (13) avec un châssis de machine (12) et une formation d'entraînement (46 ; 146 ; 246) qui peut être entraînée en rotation par rapport au châssis de machine (12) autour d'un axe d'entraînement (A) définissant une direction axiale, et qui s'étend selon l'axe d'entraînement (A) depuis une extrémité longitudinale d'introduction (46a), sur laquelle est formée la formation d'entraînement (46 ; 146 ; 246) pour introduire un couple d'entraînement, jusqu'à une extrémité longitudinale de fonction (46b, 146b, 246b) axialement opposée à l'extrémité longitudinale d'introduction (46a) et à laquelle un dispositif de travail (32 ; 132 ; 232) conçu pour un traitement du sol est relié de manière amovible dans une position opérationnelle pour travailler le sol, transmettant un couple pour une rotation commune autour de l'axe d'entraînement (A), où le dispositif de travail (32 ; 132 ; 232) est, lorsque la liaison est libérée, amovible de la position opérationnelle dans la direction axiale par rapport à la formation d'entraînement (46 ; 146 ; 246) pour le démontage de la formation d'entraînement (46 ; 146 ; 246) et peut être amené en position opérationnelle dans la direction axiale par rapport à la formation d'entraînement (46 ; 146 ; 246) pour le montage à la formation d'entraînement (46 ; 146 ; 246), un actionneur (65 ; 165 ; 265) étant prévu, formé pour sortir le dispositif de travail (32 ; 132 ; 232) de la position opérationnelle lorsque la liaison est libérée,
**caractérisé en ce que** l'actionneur (65 ; 165 ; 265) comprend un élément d'actionneur (63 ; 163 ; 263) et un boîtier d'actionneur (62, 162, 262) qui est prévu à la formation d'entraînement (46 ; 146 ; 246) pour un mouvement commun avec celui-ci à une position qui est plus proche de l'extrémité longitudinale de fonction (46b, 146b, 246b) que de l'extrémité longitudinale d'introduction (46a), l'élément d'actionneur (63, 163, 263) de l'actionneur (65, 165, 265) étant mobile par rapport au boîtier d'actionneur (63, 163, 263).

2. Machine de traitement du sol (10) selon la revendication 1,
**caractérisée en ce que** la formation d'entraînement (46 ; 146 ; 246) comprend un couvercle (60, 160, 260) fermant la formation d'entraînement (46 ; 146 ; 246) à l'extrémité longitudinale de fonction (46b, 146b, 246b), le boîtier d'actionneur (62, 162, 262) étant fixé sur le couvercle (60, 160, 260).

3. Machine de traitement du sol (10) selon la revendication 2,
**caractérisée en ce que** le boîtier d'actionneur (63, 163, 263) est arrangé sur le côté du couvercle (60, 160, 260) tourné vers l'extrémité d'introduction longitudinale (46a) et **en ce que** le couvercle (60, 160, 260) présente un évidement (60b, 160b, 260b) qui le traverse axialement et à travers lequel l'élément d'actionneur (63, 163, 263) peut entièrement passer.

4. Machine de traitement du sol (10) selon l'une des revendications 2 ou 3,
**caractérisée en ce que** la formation d'entraînement (46 ; 146 ; 246) comprend un corps de tube (48, 148, 248) que le couvercle (60, 160, 260) ferme axialement à l'extrémité longitudinale de fonction (46b, 146b, 246b) de la formation d'entraînement (46 ; 146 ; 246), au moins le boîtier d'actionneur (62, 162, 262) étant situé dans un espace de réception entouré par le couvercle et le corps de tube, une section de corps, en particulier un couvercle (60), de la formation d'entraînement (46 ; 146 ; 246) étant traversée par une ouverture de passage d'énergie (66), sur ou par laquelle une conduite de liaison d'énergie (64, 64') est accessible, qui est connectée à l'actionneur (65 ; 165 ; 265) pour transmettre une énergie d'entraînement.

5. Machine de traitement du sol (10) selon la revendication 4,
**caractérisée en ce que** la conduite de liaison (64, 64') présente à son extrémité opposée à l'actionneur (65 ; 165 ; 265) une formation de couplage (68, 68') qui est formée avec une formation de contre-couplage d'une conduite d'alimentation
(69 ; 169) pour le couplage transmettant de l'énergie.

6. Machine de traitement du sol (10) selon l'une des revendications précédentes, **caractérisée en ce que** la formation d'entraînement (46 ; 146 ; 246) présente dans une région plus proche de son extrémité longitudinale de fonction (46b ; 146b, 246b) que de son extrémité longitudinale d'introduction (46a), de préférence à l'extrémité longitudinale de fonction (46b ; 146b, 246b), un dispositif de couplage par complémentarité de forme (81, 181) transmettant un couple d'entraînement pour le couplage par complémentarité de forme transmettant un couple d'entraînement avec un arrangement de contre-couplage (83 ; 183) du dispositif de travail (32 ; 132 ; 232).

7. Machine de traitement du sol (10) selon la revendication 6, y compris la revendication 4,
**caractérisée en ce que** l'ouverture de passage d'énergie (66) est formée dans le dispositif de couplage par complémentarité de forme (81, 181).

8. Machine de traitement du sol (10) selon l'une des revendications précédentes, **caractérisée en ce que** la formation d'entraînement (46 ; 146 ; 246) présente dans une région plus proche de son extrémité longitudinale d'introduction (46a) que de son extrémité longitudinale de fonction (46b ; 146 ; 246) un cône de support (50) qui s'élargit à l'écart de l'extrémité longitudinale de fonction (46b ; 146b, 246b) et sur lequel le dispositif de travail (32) est soutenu dans sa position opérationnelle par un cône de contre-appui (51).

9. Machine de traitement du sol (10) selon l'une des revendications précédentes, **caractérisée en ce que** l'actionneur (65 ; 165 ; 265) est un actionneur mécanique fluide, en particulier hydraulique, et/ou un actionneur électromécanique.

10. Machine de traitement du sol (10) selon la revendication 9,
**caractérisée en ce que** l'actionneur (65 ; 165 ; 265) est un actionneur simple effet, en particulier un arrangement piston-cylindre simple effet avec tige de piston à rappel par ressort, ou un actionneur double effet (65 ; 165 ; 265), en particulier un arrangement piston-cylindre double effet (62, 63 ; 162, 163 ; 262, 263).

11. Machine de traitement du sol (10) selon l'une des revendications précédentes, **caractérisée en ce qu'**une formation de libération (63a ; 163a ; 263a) de l'élément d'actionneur (63 ; 163 ; 263) peut par un mouvement de l'élément d'actionneur (63 ; 163 ; 263), de préférence par le mouvement axial de l'élément d'actionneur (63 ; 163 ; 263) d'une position rétractée vers une position déployée, être amenée en engagement de transmission de force de libération avec une formation de contre-libération (92a ; 192a ; 292a) du dispositif de travail (32 ; 132 ; 232), le dispositif de travail (32 ; 132 ; 232) pouvant être déplacé hors de la position opérationnelle par l'actionneur (65 ; 165 ; 265) lorsque l'engagement de transmission de force de libération est réalisé.

12. Machine de traitement du sol (10) selon la revendication 11,
**caractérisée en ce que** la formation de libération (63a ; 163a ; 263a) est solidement reliée à l'élément d'actionneur (63, 163, 263), de préférence formée en une pièce sur celui-ci.

13. Machine de traitement du sol (10) selon la revendication 11 ou 12,
**caractérisée en ce que** la formation de libération (63a ; 163a ; 263a) est formée à une extrémité longitudinale (63a) de l'élément d'actionneur (63 ; 163 ; 263) et/ou à une saillie radiale (163d) de l'élément d'actionneur (63 ; 163 ;263).

14. Machine de traitement du sol (10) selon l'une quelconque des revendications 11 à 13, **caractérisée en ce que** la formation de contre-libération (92a) est formée sur un élément de contre-libération (90) qui peut être relié de manière amovible au dispositif de travail (32).

15. Machine de traitement du sol (10) selon l'une quelconque des revendications 11 à 13, **caractérisée en ce que** la formation de contre-libération (192a ; 292a) est formée sur une partie de composant (174 ; 274) reliée rigidement au dispositif de travail pour le mouvement commun.
